# EUROPEAN PATENT SPECIFICATION

(11) **EP 3 092 559 B1**
(45) Date of publication and mention of the grant of the patent: **19.06.2019**
(21) Application number: 14833328.9
(22) Date of filing: 31.12.2014
(51) Int. Cl.: G06F 9/451

(54) **PRESENTING AND INTERACTING WITH AUDIO-VISUAL CONTENT IN A VEHICLE**
DARSTELLUNG UND INTERAKTION MIT AUDIOVISUELLEM INHALT IN EINEM FAHRZEUG
PRÉSENTATION DE CONTENU AUDIOVISUEL ET INTERACTION AVEC CELUI-CI DANS UN VÉHICULE

(30) Priority: 06.01.2014 US 201461924211 P
(43) Date of publication of application: 16.11.2016
(73) Proprietor: Johnson Controls Technology Company, Milwaukee, WI 53209 (US)
(72) Inventor: AHMED, Waheed, 76744 Woerth (DE); WIETZKE, Joachim, 76227 Karlsruhe (DE)
(74) Representative: Schwöbel, Thilo K.
(86) International application number: PCT/US2014/072960
(87) International publication number: WO 2015/103373

(56) References cited:
- TW-A- 201 325 943
- US-A1- 2010 058 335
- US-A1- 2013 073 958
- US-A1- 2013 241 720

## Description

### BACKGROUND

The present disclosure relates generally to vehicle interface systems. The present disclosure relates more particularly to systems and methods for generating and presenting a user interface in a vehicle.

Vehicles are often equipped with driver information and entertainment systems. Such systems can have one or more graphical user interfaces, which serve to make information available to a vehicle occupant. These interfaces often allow the vehicle occupant to call up data or enter commands. Vehicle occupants typically have the ability to control entertainment content through these systems. For example, a radio control interface in a vehicle allows a vehicle occupant to tune a radio station.

Some vehicle interfaces provide vehicle occupants with navigational tools, such as allowing the user to enter a destination address and then showing directions to the user for arriving at the destination location. Such functionality has often been informed by Global Positioning System data. Other displays are sometimes provided to vehicle occupants to provide vehicle information such as fuel level, oil temperature, etc.

Conventionally, the user interfaces for the above-mentioned systems and information sources are separate. Even if a radio user interface and a navigation user interface can be brought up on the same display, the applications must be switched between manually and largely only one user interface can be shown on one display at a time. US 2010/058335 A1 discloses a system including a plurality of storage devices and a storage controller coupled to the plurality of storage devices. The storage controller has a multi-core processor, each processor core operable in parallel. The system also includes a hypervisor operable in the storage controller to manage the multiple processor cores. US 2013/241720 A1 discloses a method of configuring a vehicle control system graphical user interface to display a plurality of vehicle applications.

### SUMMARY

One implementation of the present disclosure is a vehicle interface system according to claim 1. The vehicle interface system includes at least one electronic display configured to present information to an occupant of the vehicle. The system further includes a processing circuit including one or more processors and memory. The memory stores a plurality of software applications configured to provide display data for presentation via the electronic display. The processing circuit includes a display mapper configured to generate a plurality of adjustable virtual operating fields and to assign each of the virtual operating fields to one of the software applications. Each of the virtual operating fields covers a non-overlapping portion of the electronic display and presents the display data provided by the software application to which the virtual operating field is assigned.

In the following, the term "embodiment" is to be meant as "example" unless it refers to a combination of features defined in the claims. In some embodiments, the processing circuit is configured to add a first virtual operating field to the plurality of virtual operating fields in order to display information for a first software application to which the first virtual operating field is assigned. Adding the first virtual operating field may include at least one of repositioning and resizing a second virtual operating field that is already in the plurality of operating fields with respect to the portion of the electronic display that the second virtual operating field covers. In some embodiments, the processing circuit is configured to add the first virtual operating field to the plurality of virtual operating fields only if a number of virtual operating fields in the plurality of virtual operating fields is less than a predetermined maximum number of virtual operating fields before adding the first virtual operating field.

In some embodiments, the display mapper is configured to reassign a first virtual operating field from a first software application to a second software application in response to a determination that a number of virtual operating fields in the plurality of virtual operating fields is equal to or greater than a predetermined maximum number of virtual operating fields and that no virtual operating field of the plurality of virtual operating fields is assigned to display information for the second software application.

In some embodiments, electronic display includes at least one reserved portion not covered by any virtual operating field of the plurality of virtual operating fields. The reserved portion may display road speed information and engine speed information for the vehicle.

In some embodiments, the system includes a touch sensor configured to receive an input from the vehicle occupant. The processing circuit may be configured to navigate between virtual operating fields of the plurality of virtual operating fields using the touch sensor.

In some embodiments, the processing circuit is configured to present, via the electronic display, an application management menu for managing availability and display of the plurality of software applications.

In some embodiments, at least one software application of the plurality of software applications is a navigation application and a vehicle occupant interacts with the navigation application using a wireless hand held device.

In some embodiments, the display mapper is configured to assign a first virtual operating field to a first software application and to display the first virtual operating field via a first electronic display apparatus. The display mapper may be configured to assign a second virtual operating field to a second software application and to display the second virtual operating field via a second electronic display apparatus. The first virtual operating field and the second virtual operating field may be functionally independent, allowing a first vehicle occupant to interact with the first software application via the first virtual operating field independently of a second occupant interacting with the second software application via the second virtual operating field.

In some embodiments, the at least one electronic display includes a head-up display, an instrument cluster display, and at least one other video display. At least one of the plurality of virtual operating fields may be presented via each of the head-up display, the instrument cluster display, and the at least one other video display.

Another implementation of the present disclosure is a method for processing and presenting information in a vehicle according to claim 10. The method includes displaying information to a vehicle occupant via at least one electronic display. The method further includes partitioning a display field of the at least one electronic display into a plurality of virtual operating fields. Each of the plurality of virtual operating fields covers a non-overlapping portion of the display field. The method further includes running a plurality of software applications and assigning each of the virtual operating fields to one of the plurality of software applications. The method further includes presenting, via the plurality of virtual operating fields, display data provided by the plurality of software applications. Each of the virtual operating fields presents display data provided by the software application to which the virtual operating field is assigned.

In some embodiments, the method includes adding a first virtual operating field to the plurality of virtual operating fields in order to display information for a first software application to which the first virtual operating field is assigned. Adding the first virtual operating field may include at least one of repositioning and resizing a second virtual operating field that is already in the plurality of operating fields with respect to the portion of the electronic display that the second virtual operating field covers. In some embodiments, the first virtual operating field is added to the plurality of virtual operating fields only if the number of virtual operating fields in the plurality of virtual operating fields is determined to be less than the predetermined maximum number of virtual operating fields before adding the first virtual operating field.

In some embodiments, the method includes determining whether a number of virtual operating fields in the plurality of virtual operating fields is equal to or greater than a predetermined maximum number of virtual operating fields and determining whether any virtual operating field of the plurality of virtual operating fields is assigned to display information for a second software application. The method may include reassigning a first virtual operating field from a first software application to the second software application in response to a determination that the number of virtual operating fields in the plurality of virtual operating fields is equal to or greater than the predetermined maximum number of virtual operating fields and that no virtual operating field of the plurality of virtual operating fields is assigned to display information for the second software application.

In some embodiments, the electronic display includes at least one reserved portion not covered by any virtual operating field of the plurality of virtual operating fields. The method may include displaying at least one of road speed information and engine speed information for the vehicle via the reserved portion.

Another implementation of the present disclosure is a non-transitory computer-readable storage medium sorting computer program code for processing and presenting information in a vehicle according to claim 12. The computer program code is effective to display information to a vehicle occupant via at least one electronic display and partition a display field of the at least one electronic display into a plurality of virtual operating fields. Each of the plurality of virtual operating fields covers a non-overlapping portion of the display field. The computer program code is effective to run a plurality of software applications and assign each of the virtual operating fields to one of the plurality of software applications. The compute program code is effective to present, via the plurality of virtual operating fields, display data provided by the plurality of software applications. Each of the virtual operating fields presents display data provided by the software application to which the virtual operating field is assigned.

Those skilled in the art will appreciate that the summary is illustrative only and is not intended to be in any way limiting. Other aspects, inventive features, and advantages of the devices and/or processes described herein, as defined solely by the claims, will become apparent in the detailed description set forth herein and taken in conjunction with the accompanying drawings.

### BRIEF DESCRIPTION OF THE DRAWINGS

FIG. 1A is a drawing of a vehicle in which embodiments of the present invention may be implemented, according to an exemplary embodiment.
FIG. 1B is a block diagram of an audio-visual system which may be implemented in the vehicle of FIG. 1A, according to an exemplary embodiment.
FIG. 1C is a block diagram illustrating the system architecture for the audio-visual system of FIG. 1B, according to an exemplary embodiment.
FIGS. ID-IE are flowcharts of processes for using the audio-visual system of FIG. 1C, according to an exemplary embodiment.
FIG. IF is a block diagram of a vehicle interface system including a multi-core processing environment, according to an exemplary embodiment.
FIG. 1G is a block diagram illustrating the multi-core processing environment of FIG. IF in greater detail, according to an exemplary embodiment.
FIGS. 2A-2C illustrate an audio-visual system with various display apparatuses which may be used in conjunction with the present invention, according to an exemplary embodiment.
FIGS. 3A-3F illustrate various input apparatuses which may be used in conjunction with the audio-visual system of FIGS. 2A-2C, according to an exemplary embodiment.
FIGS. 4A-4F illustrate virtual operating fields on a display apparatus, according to an exemplary embodiment.
FIGS. 4G-4H are flowcharts of processes for changing the applications that are displayed on the display apparatus of FIGS. 4A-4H, according to an exemplary embodiment.
FIGS. 5A-5F illustrate virtual operating fields on another display apparatus, according to an exemplary embodiment.
FIGS. 5G-5H are flowcharts of processes for changing the applications that are displayed on the display apparatus of FIGS. 5A-5F, according to an exemplary embodiment.
FIGS. 6A-6B illustrate virtual operating fields on another display apparatus, according to an exemplary embodiment.
FIGS. 7A-7D illustrate the assignment of virtual operating fields to applications performed by the vehicle interface system of the present invention, according to an exemplary embodiment.
FIGS. 8A-8C illustrate the changing of focus on virtual operating spaces and items in those spaces performed by the vehicle interface system of the present invention, according to an exemplary embodiment.
FIGS. 9A-9E illustrate a touch sensor configured to receive various user inputs, according to an exemplary embodiment.
FIGS. 10A-10I illustrate interfaces for receiving user input and processes for making selections based on that input, according to an exemplary embodiment.
FIGS. 11A-11B illustrate the presentation of popups and warning notifications performed by the vehicle interface system of the present invention, according to an exemplary embodiment.
FIG. 12A is a flowchart of a process for managing applications and distributing the display of applications across display apparatuses, according to an exemplary embodiment.
FIG. 12B is a drawing of an interface for application management that may be generated by the vehicle interface system of the present invention, according to an exemplary embodiment.
FIG. 13 illustrates an exemplary configuration of an audio-visual system for allowing provision of applications to input/output devices, according to an exemplary embodiment.
FIG. 14 is a flowchart of a process for sharing audio-visual system information between multiple vehicles, according to an exemplary embodiment.

### DETAILED DESCRIPTION

The following detailed description explains various embodiments of the invention. These embodiments are merely illustrative, and those of skill in the art will recognize that other embodiments fall within the scope of the invention.

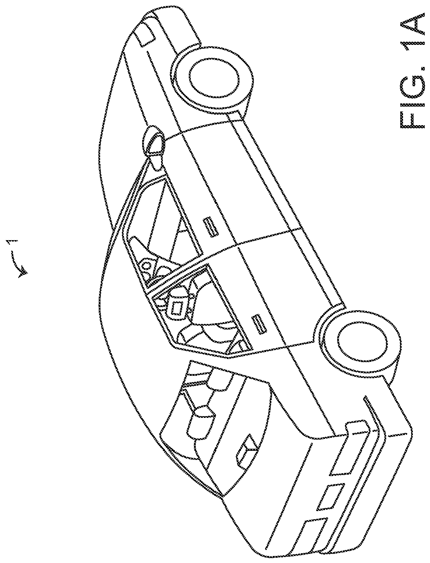

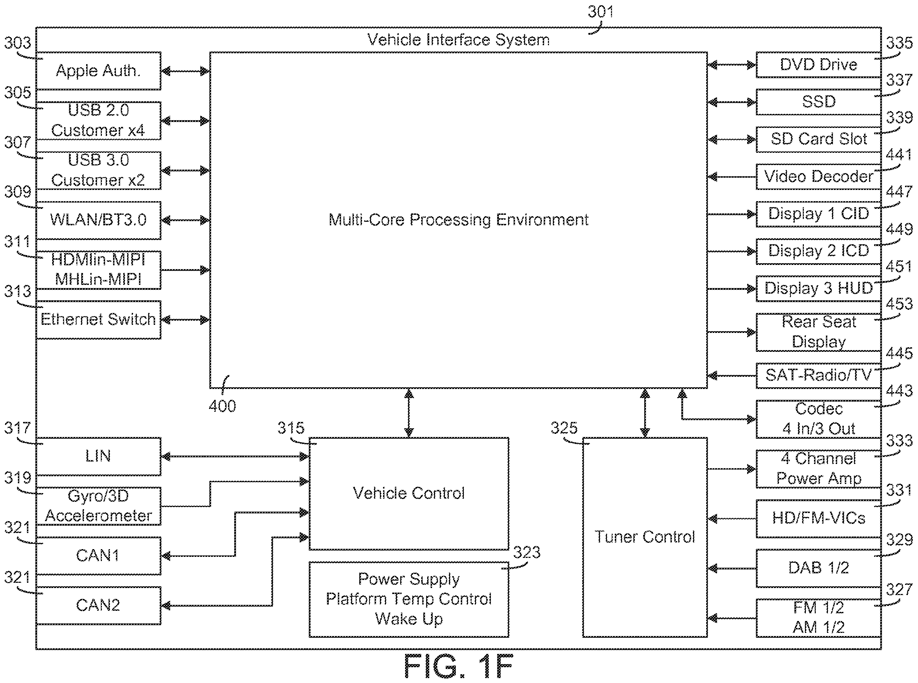

Referring now to FIG. 1A, an exemplary automobile 1 is shown. The features of the embodiments described herein may be implemented for a vehicle such as automobile 1. The embodiments described herein advantageously provide improved display functionality for a driver or passengers of automobile 1. The embodiments further provide improved control to a driver or passenger of automobile 1 over various electronic and mechanical systems of automobile 1.

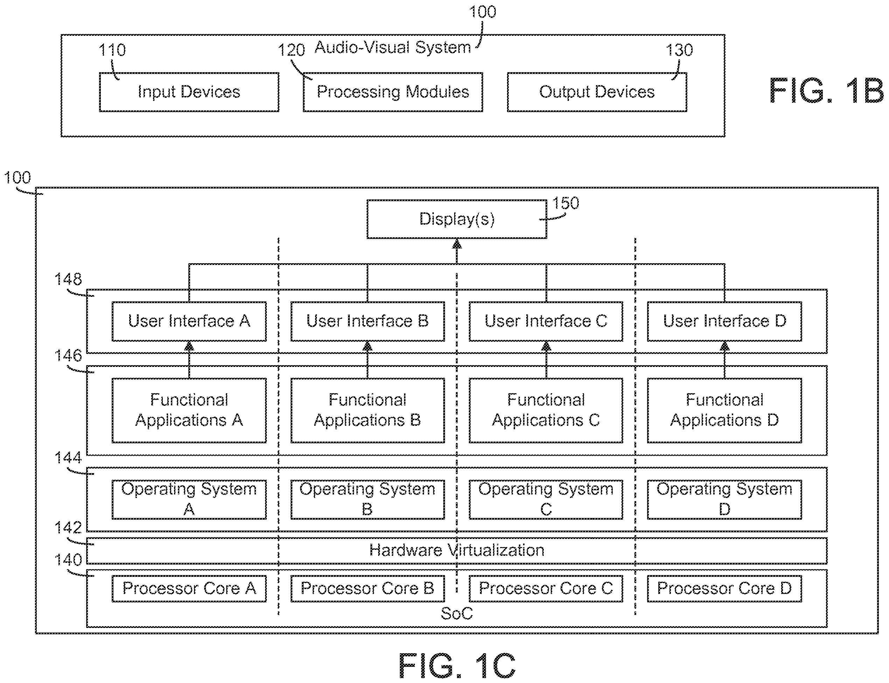

Referring now to FIG. 1B, a simplified block diagram of an audio-visual system 100 is shown, according to some embodiments of the present invention. As shown, audio-visual system 100 contains input devices 110, processing modules 120, and output devices 130. Audio-visual system 100 may further contain other components. Audio-visual system 100 may be implemented as a system including hardware and/or software for controlling the hardware, installed in automobile 1.

Referring now to FIG. 1C a system architecture for audio-visual system 100 is shown, according to some embodiments of the present invention. As shown, audio-visual system 100 may contain a variety of hardware and software structures having horizontal layering relationships and vertical compartmentalizing relationships.

At a low level, audio-visual system 100 may include a system-on-a-chip ("SoC") layer 140, or some other hardware layer containing features of hardware processors, memory devices, graphics processing devices, and other electronics. In the exemplary hardware architecture of FIG. 1C, SoC layer 140 contains four processor cores (shown as A, B, C, and D) that are capable of executing digital signals as part of audio-visual system 100. In other embodiments, SoC layer 140 may be implemented by other hardware configurations. For example, the function of SoC layer 140 may be performed using one or more processers located on a single or multiple motherboards of a general purpose computing device, remote computational assets such as servers which deliver computational information to audio-visual system 100, etc.

Running on SoC layer 140 is hardware virtualization layer 142. Hardware virtualization layer 142 may include software for controlling access to SoC layer 140 and its processor cores. Higher-level software layers can run compartmentalized on single processor cores without interrupting operation of other compartmentalized software running on other processor cores of SoC layer 140.

Running on hardware virtualization layer 142 is operating system layer 144. Operating system layer 144 may include multiple independent instances of operating systems executed simultaneously. This functionality may be enabled based on the previously mentioned capabilities of hardware virtualization layer 142 to compartmentalize higher-level software operations. As an example, operating system layer 144 may include a first instance of a Linux operating system, an second instance of a Linux operating system, an instance of an Android operating system, and an instance of a QNX automotive operating system. Each operating system may run simultaneously and independent of one another. Hardware virtualization layer 142 may facilitate this simultaneous and independent operation of four operating system instances by functionally compartmentalizing each operating system to run independently and exclusively on its own processor core in SoC layer 140.

Running on operating system layer 144 is functional layer 146. Functional layer 146 may include various software applications performing functions related to automobile 1, the passengers of automobile 1, entertainment content, or various other functions of audio-visual system 100. Functional layer 146 maybe compartmentalized so that software applications of a similar type or variety are grouped together. By way of example, a first functional application (functional application A) may contain software applications related to an instrument cluster or a head-up display device. A second functional application (functional application B) may contain software applications related to the mechanical operation of automobile 1. A third functional application (functional application C) may contain software related to entertainment content. A fourth functional application (functional application D) may contain software related to providing network or cloud based services to automobile 1 or a passenger of automobile 1.

The exemplary audio-visual system 100 of FIG. 1C contains a user interface layer 148 that provides various capabilities for interacting with the user. User interface layer 148 may include user interface technologies such as reception of touch sensor input, reception of voice commands, etc. Audio-visual system 100 of FIG. 1C further contains display apparatuses 150 for providing various means of output to a passenger of the automobile 1.

In some embodiments, audio-visual system 100 may include additional computational hardware for performing other general tasks discussed herein (e.g., executing code, handing input, generating output, etc. for a customization menu; communicating with devices other than audio-visual system 100 such as mobile computing devices, servers, etc.). In other embodiments, the general tasks described herein may be performed by one or more processor cores.

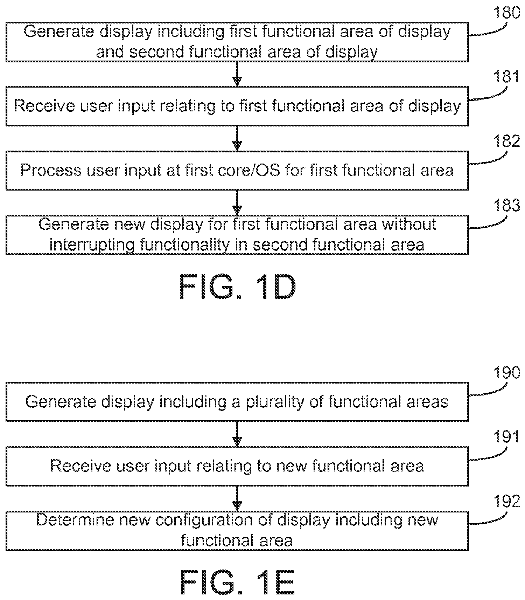

Referring now to FIGS. ID-IE, exemplary processes for using audio-visual system 100 are shown, according to some embodiments of the present invention. As shown in FIG. 1D, a process begins at step 180 where audio-visual system 100 generates a display of information including a first functional area of the display and a second functional area of the display. At step 181, audio-visual system 100 receives user input relating to the first functional area of the display. At step 182, audio-visual system 100 processes the user input at an operating system and a first process core that is assigned to the first functional area. At step 183, audio-visual system 100 generates a new display of information for the first functional area without interrupting functionality of the second functional area.

As shown in FIG. 1E, a process begins at step 190 where audio-visual system 100 generates a display of information including a plurality of functional areas. At step 191, audio-visual system 100 receives user input relating to a new functional area not already a part of the display of information. At step 192, audio-visual system 100 determines a new configuration for the display of information so as to include the new functional area.

Referring now to FIG. IF, a vehicle interface system 301 is shown, according to an exemplary embodiment. Vehicle interface system 301 includes connections between a multi-core processing environment 400 and input/output devices, connections, and/or elements. Multi-core processing environment 400 may provide the system architecture for an in-vehicle audio-visual system, as previously described. Multi-core processing environment 400 may include a variety of computing hardware components (e.g., processors, integrated circuits, printed circuit boards, random access memory, hard disk storage, solid state memory storage, communication devices, etc.). In some embodiments, multi-core processing environment 400 manages various inputs and outputs exchanged between applications running within multi-core processing environment 400 and/or various peripheral devices (e.g., devices 303-445) according to the system architecture. Multi-core processing environment 400 may perform calculations, run applications, manage vehicle interface system 301, preform general processing tasks, run operating systems, etc.

Multi-core processing environment 400 may be connected to connector hardware which allows multi-core processing environment 400 to receive information from other devices or sources and/or send information to other devices or sources. For example, multi-core processing environment 400 may send data to or receive data from portable media devices, data storage devices, servers, mobile phones, etc. which are connected to multi-core processing environment 400 through connector hardware. In some embodiments, multi-core processing environment 400 is connected to an apple authorized connector 303. Apple authorized connector 303 may be any connector for connection to an APPLE® product. For example, apple authorized connector 303 may be a firewire connector, 30-pin APPLE® device compatible connector, lightning connector, etc.

In some examples, multi-core processing environment 400 is connected to a Universal Serial Bus version 2.0 ("USB 2.0") connector 305. USB 2.0 connector 305 may allow for connection of one or more device or data sources. For example, USB 2.0 connector 305 may include four female connectors. In other examples, USB 2.0 connector 305 includes one or more male connectors. In some examples, multi-core processing environment 400 is connected with a Universal Serial Bus version 3.0 ("USB 3.0") connector 307. As described with reference to USB 2.0 connector 305, USB 3.0 connector 307 may include one or more male or female connections to allow compatible devices to connect.

In some embodiments, multi-core processing environment 400 is connected to one or more wireless communications connections 309. Wireless communications connection 309 may be implemented with additional wireless communications devices (e.g., processors, antennas, etc.). Wireless communications connection 309 allows for data transfer between multi-core processing environment 400 and other devices or sources. For example, wireless communications connection 309 may allow for data transfer using infrared communication, Bluetooth communication such as Bluetooth 3.0, ZigBee communication, Wi-Fi communication, communication over a local area network and/or wireless local area network, etc.

In some embodiments, multi-core processing environment 400 is connected to one or more video connectors 311. Video connector 311 allows for the transmission of video data between devices/sources and multi-core processing environment 400 is connected. For example, video connector 311 may be a connector or connection following a standard such as High-Definition Multimedia Interface (HDMI), Mobile High-definition Link (MHL), etc. In some embodiments, video connector 311 includes hardware components which facilitate data transfer and/or comply with a standard. For example, video connector 311 may implement a standard using auxiliary processors, integrated circuits, memory, a mobile Industry Processor Interface, etc.

In some embodiments, multi-core processing environment 400 is connected to one or more wired networking connections 313. Wired networking connections 313 may include connection hardware and/or networking devices. For example, wired networking connection 313 may be an Ethernet switch, router, hub, network bridge, etc.

Multi-core processing environment 400 may be connected to a vehicle control 315. In some embodiments, vehicle control 315 allows multi-core processing environment 400 to connect to vehicle control equipment such as processors, memory, sensors, etc. used by the vehicle. For example, vehicle control 315 may connect multi-core processing environment 400 to an engine control unit, airbag module, body controller, cruise control module, transmission controller, etc. In other embodiments, multi-core processing environment 400 is connected directly to computer systems, such as the ones listed. In such a case, vehicle control 315 is the vehicle control system including elements such as an engine control unit, onboard processors, onboard memory, etc. Vehicle control 315 may route information form additional sources connected to vehicle control 315. Information may be routed from additional sources to multi-core processing environment 400 and/or from multi-core processing environment 400 to additional sources.

In some embodiments, vehicle control 315 is connected to one or more Local Interconnect Networks (LIN) 317, vehicle sensors 319, and/or Controller Area Networks (CAN) 321. LIN 317 may follow the LIN protocol and allow communication between vehicle components. Vehicle sensors 319 may include sensors for determining vehicle telemetry. For example, vehicle sensors 319 may be one or more of gyroscopes, accelerometers, three dimensional accelerometers, inclinometers, etc. CAN 321 may be connected to vehicle control 315 by a CAN bus. CAN 321 may control or receive feedback from sensors within the vehicle. CAN 321 may also be in communication with electronic control units of the vehicle. In other embodiments, the functions of vehicle control 315 may be implemented by multi-core processing environment 400. For example, vehicle control 315 may be omitted and multi-core processing environment 400 may connect directly to LIN 317, vehicle sensors 319, CAN 321, or other components of a vehicle.

In some examples, vehicle interface system 301 includes a systems module 323. Systems module 323 may include a power supply and/or otherwise provide electrical power to vehicle interface system 301. Systems module 323 may include components which monitor or control the platform temperature. Systems module 323 may also perform wake up and/or sleep functions.

Still referring to FIG. IF, multi-core processing environment 400 may be connected to a tuner control 325. In some examples, tuner control 325 allows multi-core processing environment 400 to connect to wireless signal receivers. Tuner control 325 may be an interface between multi-core processing environment 400 and wireless transmission receivers such as FM antennas, AM antennas, etc. Tuner control 325 may allow multi-core processing environment 400 to receive signals and/or control receivers. In other examples, tuner control 325 includes wireless signal receivers and/or antennas. Tuner control 325 may receive wireless signals as controlled by multi-core processing environment 400. For example, multi-core processing environment 400 may instruct tuner control 325 to tune to a specific frequency.

In some examples, tuner control 325 is connected to one or more FM and AM sources 327, Digital Audio Broadcasting (DAB) sources 329, and/or one or more High Definition (HD) radio sources 331. FM and AM source 327 may be a wireless signal. In some examples, FM and AM source 327 may include hardware such as receivers, antennas, etc. DAB source 329 may be a wireless signal utilizing DAB technology and/or protocols. In other examples, DAB source 329 may include hardware such as an antenna, receiver, processor, etc. HD radio source 331 may be a wireless signal utilizing HD radio technology and/or protocols. In other examples, HD radio source 331 may include hardware such as an antenna, receiver, processor, etc.

In some examples, tuner control 325 is connected to one more amplifiers 333. Amplifier 333 may receive audio signals from tuner control 325. Amplifier 333 amplifies the signal and outputs it to one or more speakers. For example, amplifier 333 may be a four channel power amplifier connected to one or more speakers (e.g., 4 speakers). In some examples, multi-core processing environment 400 may send an audio signal (e.g., generated by an application within multi-core processing environment 400) to tuner control 325, which in turn sends the signal to amplifier 333.

Still referring to FIG. IF, multi-core processing environment 400 may connected to connector hardware 335-445 which allows multi-core processing environment 400 to receive information from media sources and/or send information to media sources. In other embodiments, multi-core processing environment 400 may be directly connected to media sources, have media sources incorporated within multi-core processing environment 400, and/or otherwise receive and send media information.

In some examples, multi-core processing environment 400 is connected to one or more DVD drives 335. DVD drive 335 provides DVD information to multi-core processing environment 400 from a DVD disk inserted into DVD drive 335. Multi-core processing environment 400 may control DVD drive 335 through the connection (e.g., read the DVD disk, eject the DVD disk, play information, stop information, etc.) In further examples, multi-core processing environment 400 uses DVD drive 335 to write data to a DVD disk.

In some examples, multi-core processing environment 400 is connected to one or more Solid State Drives (SSD) 337. In some examples, multi-core processing environment 400 is connected directly to SSD 337. In other examples, multi-core processing environment 400 is connected to connection hardware which allows the removal of SSD 337. SSD 337 may contain digital data. For example, SSD 337 may include images, videos, text, audio, applications, etc. stored digitally. In further examples, multi-core processing environment 400 uses its connection to SSD 337 in order to store information on SSD 337.

In some examples, multi-core processing environment 400 is connected to one or more Secure Digital (SD) card slots 339. SD card slot 339 is configured to accept an SD card. In some examples, multiple SD card slots 339 are connected to multi-core processing environment 400 that accept different sizes of SD cards (e.g., micro, full size, etc.). SD card slot 339 allows multi-core processing environment 400 to retrieve information from an SD card and/or to write information to an SD card. For example, multi-core processing environment 400 may retrieve application data from the above described sources and/or write application data to the above described sources.

In some examples, multi-core processing environment 400 is connected to one or more video decoders 441. Video decoder 441 may provide video information to multi-core processing environment 400. In some examples, multi-core processing environment 400 may provide information to video decoder 441 which decodes the information and sends it to multi-core processing environment 400.

In some examples, multi-core processing environment 400 is connected to one or more codecs 443. Codecs 443 may provide information to multi-core processing environment 400 allowing for encoding or decoding of a digital data stream or signal. Codec 443 may be a computer program running on additional hardware (e.g., processors, memory, etc.). In other examples, codec 443 may be a program run on the hardware of multi-core processing environment 400. In further examples, codec 443 includes information used by multi-core processing environment 400. In some examples, multi-core processing environment 400 may retrieve information from codec 443 and/or provide information (e.g., an additional codec) to codec 443.

In some examples, multi-core processing environment 400 connects to one or more satellite sources 445. Satellite source 445 may be a signal and/or data received from a satellite. For example, satellite source 445 may be a satellite radio and/or satellite television signal. In some examples, satellite source 445 is a signal or data. In other examples, satellite source 445 may include hardware components such as antennas, receivers, processors, etc.

Still referring to FIG. IF, multi-core processing environment 400 may be connected to input/output devices 441-453. Input/output devices 441-453 may allow multi-core processing environment 400 to display information to a user. Input/output devices 441-453 may also allow a user to provide multi-core processing environment 400 with control inputs.

In some examples, multi-core processing environment 400 is connected to one or more CID displays 447. Multi-core processing environment 400 may output images, data, video, etc. to CID display 447. For example, an application running within multi-core processing environment 400 may output to CID display 447. In some examples, CID display 447 may send input information to multi-core processing environment 400. For example, CID display 447 may be touch enabled and send input information to multi-core processing environment 400.

In some examples, multi-core processing environment 400 is connected to one or more ICD displays 449. Multi-core processing environment 400 may output images, data, video, etc. to ICD display 449. For example, an application running within multi-core processing environment 400 may output to ICD display 449. In some examples, ICD display 449 may send input information to multi-core processing environment 400. For example, ICD display 449 may be touch enabled and send input information to multi-core processing environment 400.

In some examples, multi-core processing environment 400 is connected to one or more HUD displays 451. Multi-core processing environment 400 may output images, data, video, etc. to HUD displays 451. For example, an application running within multi-core processing environment 400 may output to HUD displays 451. In some examples, HUD displays 451 may send input information to multi-core processing environment 400.

In some examples, multi-core processing environment 400 is connected to one or more rear seat displays 453. Multi-core processing environment 400 may output images, data, video, etc. to rear seat displays 453. For example, an application running within multi-core processing environment 400 may output to rear seat displays 453. In some examples, rear seat displays 453 may send input information to multi-core processing environment 400. For example, rear seat displays 453 may be touch enabled and send input information to multi-core processing environment 400.

In further embodiments, multi-core processing environment 400 may also receive inputs from other sources. For example multi-core processing environment 400 may receive inputs from hard key controls (e.g., buttons, knobs, switches, etc.). In some embodiments, multi-core processing environment 400 may also receive inputs from connected devices such as personal media devices, mobile phones, etc. In additional embodiments, multi-core processing environment 400 may output to these devices.

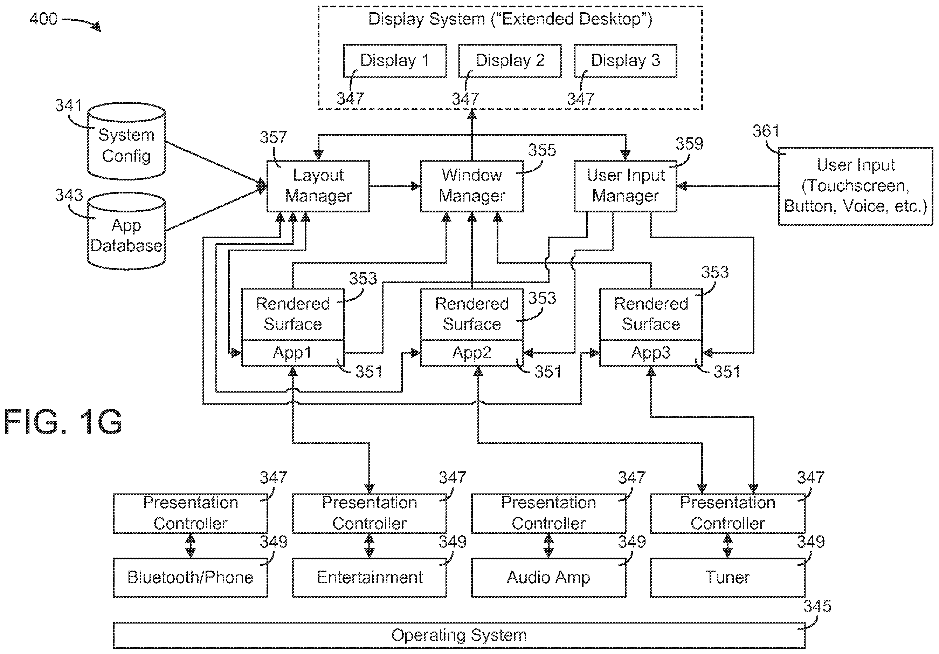

Referring now to FIG. 1G, various operational modules running within multi-core processing environment 400 are shown, according to an exemplary embodiment. The operational modules are used in order to generate application images (e.g., graphic output) for display on display devices within the vehicle. Application images may include frame buffer content. The operational modules may be computer code stored in memory and executed by computing components of multi-core processing environment 400 and/or hardware components. The operational modules may be or include hardware components. In some embodiments, the operational modules illustrated in FIG. 1G are implemented on a single core of multi-core processing environment 400.

In some embodiments, multi-core processing environment 400 includes system configuration module 341. System configuration module 341 may store information related to the system configuration. For example, system configuration module 341 may include information such as the number of connected displays, the type of connected displays, user preferences (e.g., favorite applications, preferred application locations, etc.), default values (e.g., default display location for applications), etc.

In some embodiments, multi-core processing environment 400 includes application database module 343. Application database module 343 may contain information related to each application loaded and/or running in multi-core processing environment 400. For example, application database module 343 may contain display information related to a particular application (e.g., item/display configurations, colors, interactive elements, associated images and/or video, etc.), default or preference information (e.g., whitelist" or "blacklist" information, default display locations, favorite status, etc.), etc.

In some embodiments, multi-core processing environment 400 includes operating system module 345. Operating system module 345 may include information related to one or more operating systems running within multi-core processing environment 400. For example, operating system module 345 may include executable code, kernel, memory, mode information, interrupt information, program execution instructions, device drivers, user interface shell, etc. In some embodiments, operating system module 345 may be used to manage all other modules of multi-core processing environment 400.

In some embodiments, multi-core processing environment 400 includes one or more presentation controller modules 347. Presentation controller module 347 may provide a communication link between one or more component modules 349 and one or more application modules 351. Presentation controller module 347 may handle inputs and/or outputs between component module 349 and application module 351. For example, presentation controller 347 may route information form component module 349 to the appropriate application. Similarly, presentation controller 347 may route output instructions from application module 351 to the appropriate component module 349. In some embodiments, presentation controller module 347 may allow multi-core processing environment 400 to preprocess data before routing the data. For example presentation controller 347 may convert information into a form that may be handled by either application module 351 or component module 349.

In some embodiments, component module 349 handles input and/or output related to a component (e.g., mobile phone, entertainment device such as a DVD drive, amplifier, signal tuner, etc.) connected to multi-core processing environment 400. For example, component module 349 may provide instructions to receive inputs from a component. Component module 349 may receive inputs from a component and/or process inputs. For example, component module 349 may translate an input into an instruction. Similarly, component module 349 may translate an output instruction into an output or output command for a component. In other embodiments, component module 349 stores information used to perform the above described tasks. Component module 349 may be accessed by presentation controller module 347. Presentation controller module 347 may then interface with an application module 351 and/or component.

Application module 351 may run an application. Application module 351 may receive input from presentation controller 347, window manager 355, layout manager 357, and/or user input manager 359. Application module 351 may also output information to presentation controller 347, window manager 355, layout manager 357, and/or user input manager 359. Application module 351 performs calculations based on inputs and generates outputs. The outputs are then sent to a different module. Examples of applications include a weather information application which retrieves weather information and displays it to a user, a notification application which retrieves notifications from a mobile device and displays them to a user, a mobile device interface application which allows a user to control a mobile device using other input devices, games, calendars, video players, music streaming applications, etc. In some embodiments, application module 351 handles events caused by calculations, processes, inputs, and/or outputs. Application module 351 may handle user input and/or update an image to be displayed (e.g., rendered surface 353) in response. Application module 351 may handle other operations such as exiting an application launching an application, etc.

Application module 351 may generate one or more rendered surfaces 353. A rendered surface is the information which is displayed to a user. In some embodiments, rendered surface 353 includes information allowing for the display of an application through a virtual operating field located on a display. For example, rendered surface 353 may include the layout of elements to be displayed, values to be displayed, labels to be displayed, fields to be displayed, colors, shapes, etc. In other embodiments, rendered surface 353 may include only information to be included within an image displayed to a user. For example, rendered surface 353 may include values, labels, and/or fields, but the layout (e.g., position of information, color, size, etc.) may be determined by other modules (e.g., layout manager 357, window manager 355, etc.).

Window manager 355 manages the display of information on one or more displays 347. In some embodiments, windows manager 355 takes input from other modules. For example, window manager 355 may use input from layout manager 357 and application module 351 (e.g., rendered surface 353) to compose an image for display on display 347. Window manager 355 may route display information to the appropriate display 347. Input from layout manger 357 may include information from system configuration module 341, application database module 343, user input instructions to change a display layout from user input manager 359, a layout of application displays on a single display 347 according to a layout heuristic or rule for managing virtual operating fields associated with a display 347, etc. Similarly, window manager 355 may handle inputs and route them to other modules (e.g., output instructions). For example, window manager 355 may receive a user input and redirect it to the appropriate client or application module 351. In some embodiments, windows manager 355 can compose different client or application surfaces (e.g., display images) based on X,Y, or Z order. Windows manager 355 may be controlled by a user through user inputs. Windows manager 355 may communicate to clients or applications over a shell (e.g., Wayland shell). For example, window manager 355 may be a X-Server window manager, Windows window manager, Wayland window manager, Wayland server, etc.).

Layout manager 357 generates the layout of applications to be displayed on one or more displays 347. Layout manager 357 may acquire system configuration information for use in generating a layout of application data. For example, layout manager 357 may acquire system configuration information such as the number of displays 347 including the resolution and location of the displays 347, the number of window managers in the system, screen layout scheme of the monitors (bining), vehicle states, etc. In some embodiments, system configuration information may be retrieved by layout manager 357 from system configuration module 341.

Layout manager 357 may also acquire application information for use in generating a layout of application data. For example, layout manager 357 may acquire application information such as which applications are allowed to be displayed on which displays 347 (e.g., HUD, CID, ICD, etc.), the display resolutions supported by each application, application status (e.g., which applications are running or active), track system and/or non-system applications (e.g., task bar, configuration menu, engineering screen etc.), etc.

In some embodiments, layout manager 357 may acquire application information from application database module 343. In further embodiments, layout manager 357 may acquire application information from application module 351. Layout manager 357 may also receive user input information. For example, an instruction and/or information resulting from a user input may be sent to layout manager 357 from user input manager 359. For example, a user input may result in an instruction to move an application from one display 347 to another display 347, resize an application image, display additional application items, exit an application, etc. Layout manager 357 may execute an instruction and/or process information to generate a new display layout based wholly or in part on the user input.

Layout manager 357 may use the above information or other information to determine the layout for application data (e.g., rendered surface 353) to be displayed on one or more displays. Many layouts are possible. Layout manager 357 may use a variety of techniques to generate a layout as described herein. These techniques may include, for example, size optimization, prioritization of applications, response to user input, rules, heuristics, layout databases, etc.

Layout manager 357 may output information to other modules. In some embodiments, layout manager 357 sends an instruction and/or data to application module 351 to render application information and/or items in a certain configuration (e.g., a certain size, for a certain display 347, for a certain display location (e.g., virtual operating field), etc. For example, layout manager 357 may instruct application module 351 to generate a rendered surface 353 based on information and/or instructions acquired by layout manager 357.

In some embodiments, rendered surface 353 or other application data may be sent back to layout manager 357 which may then forward it on to widow manager 355. For example, information such as the orientation of applications and/or virtual operating fields, size of applications and/or virtual operating fields, which display 347 on which to display applications and/or virtual operating fields, etc. may be passed to window manager 355 by layout manager 357. In other embodiments, rendered surface 353 or other application data generated by application module 351 in response to instructions from layout manager 357 may be transmitted to window manager 355 directly. In further embodiments, layout manager 357 may communicate information to user input manager 359. For example, layout manager 357 may provide interlock information to user input manager 359 to prevent certain user inputs.

Multi-core processing environment 400 may receive user input 361. User input 361 may be in response to user inputs such as touchscreen input (e.g., presses, swipes, gestures, etc.), hard key input (e.g., pressing buttons, turning knobs, activating switches, etc.), voice commands, etc. In some embodiments, user input 361 may be input signals or instructions. For example, input hardware and/or intermediate control hardware and/or software may process a user input and send information to multicore processing environment 400. In other embodiments, multi-core processing environment 400 receives user input 361 from vehicle interface system 301. In further embodiments, multi-core processing environment 400 receives direct user inputs (e.g., changes in voltage, measured capacitance, measured resistance, etc.). Multi-core processing environment 400 may process or otherwise handle direct user inputs. For example, user input manager 359 and/or additional module may process direct user input.

User input manager 359 receives user input 361. User input manager 359 may process user inputs 361. For example, user input manager 359 may receive a user input 361 and generate an instruction based on the user input 361. For example, user input manager 359 may process a user input 361 consisting of a change in capacitance on a CID display and generate an input instruction corresponding to a left to right swipe on the CID display. User input manager may also determine information corresponding to a user input 361. For example, user input manager 359 may determine which application module 351 corresponds to the user input 361. User input manager 359 may make this determination based on the user input 361 and application layout information received from layout manager 357, window information from window manager 355, and/or application information received from application module 351.

User input manager 359 may output information and/or instructions corresponding to a user input 361. Information and/or instructions may be output to layout manager 357. For example, an instruction to move an application from one display 347 to another display 347 may be sent to layout manager 357 which instructs application modules 351 to produce an updated rendered surface 353 for the corresponding display 347. In other embodiments, information and/or instructions may be output to window manager 355. For example, information and/or instruction may be output to window manager 355 which may then forward the information and/or instruction to one or more application modules 351. In further embodiments, user input manager 359 outputs information and/or instructions directly to application modules 351.

Rendered surfaces 353 and/or application information may be displayed on one or more displays 347. Displays 347 may be ICDs, CIDs, HUDs, rear seat displays, etc. In some embodiments, displays 347 may include integrated input devices. For example a CID display 347 may be a capacitive touchscreen. One or more displays 347 may form a display system (e.g., extended desktop). The displays 347 of a display system may be coordinated by one or modules of multi-core processing environment 400. For example, layout manager 357 and/or window manager 355 may determine which applications are displayed on which display 347 of the display system. Similarly, one or more module may coordinate interaction between multiple displays 347. For example, multi-core processing environment 400 may coordinate moving an application from one display 347 to another display 347.

The explanation of characteristics of audio-visual system 100 as discussed above in the preceding figures is exemplary, and other embodiments are foreseeable.

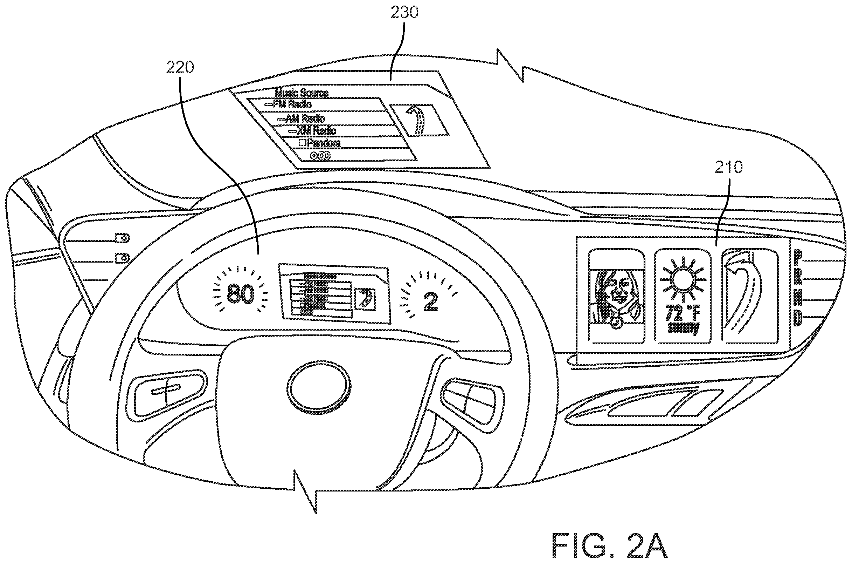

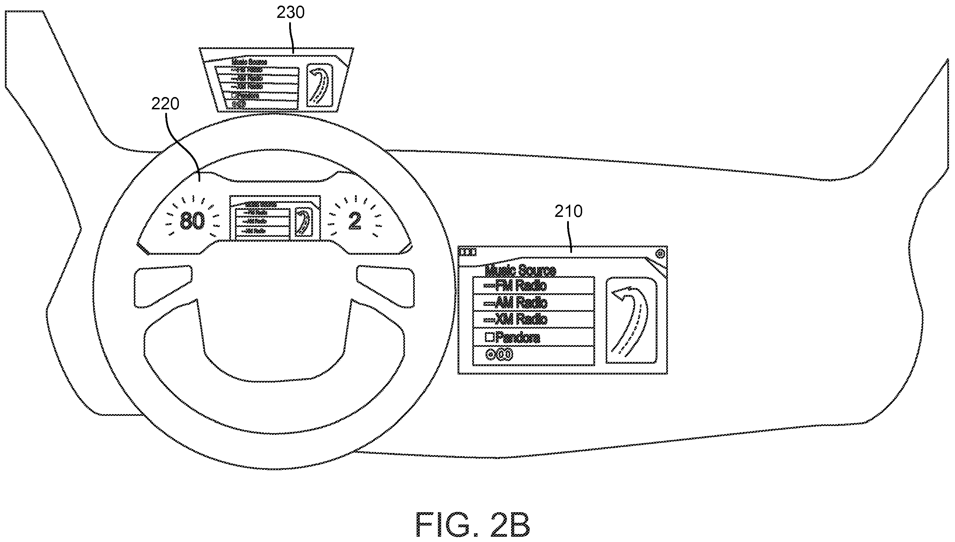

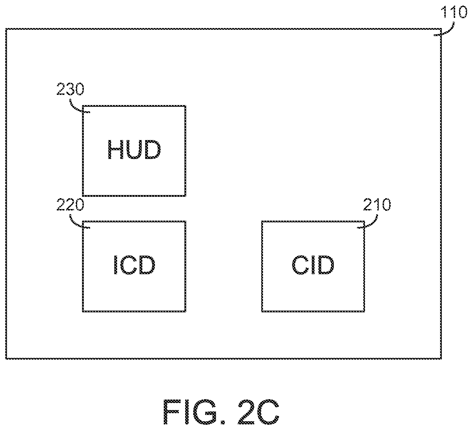

Referring now to FIGS. 2A-2C, an audio-visual system 100 with multiple display apparatuses is shown, according to some embodiments of the present invention. FIG. 2A shows an exemplary interior of automobile 1. As shown, three display apparatuses are provided: center information display ("CID") 210, instrument cluster display ("ICD") 220, and head-up display ("HUD") 230. In the example shown in FIG. 2A, CID 210 is provided in a center console, ICD 220 is provided set into the dashboard behind the steering wheel, and HUD 230 is provided displayed onto the windshield. FIG. 2B shows another perspective of the exemplary automobile and display apparatuses of FIG. 2A. FIG. 2C shows CID 210, ICD 220, and HUD 230 in block diagram form as part of output devices 130, which is a part of audio-visual system 100.

The depiction of audio-visual system 100 as shown in the preceding figures is exemplary, and other embodiments are foreseeable. By example, audio-visual system 100 may contain further display apparatuses, such as a display apparatus inset into the back of a headrest for a front-row seat so that a passenger in the second row may view the display apparatus. As a further example, HUD 230 may be provided in a variety of fashions falling within the principles of a head-up display. For instance, HUD 230 may consist of an image projected onto the windshield of automobile 1, or HUD 230 may consist of a rigid transparent screen protruding upwards from the dashboard and onto which information is projected or otherwise displayed. Audio-visual system 100 may contain fewer than the three display apparatuses, more display apparatuses, different display apparatuses, placement of display apparatuses in different locations in or adjacent to automobile 1, or in other variations still within the scope of the present invention. Furthermore, audio-visual system 100 may contain non-display components, such as processing components and input components, as discussed in further detail later.

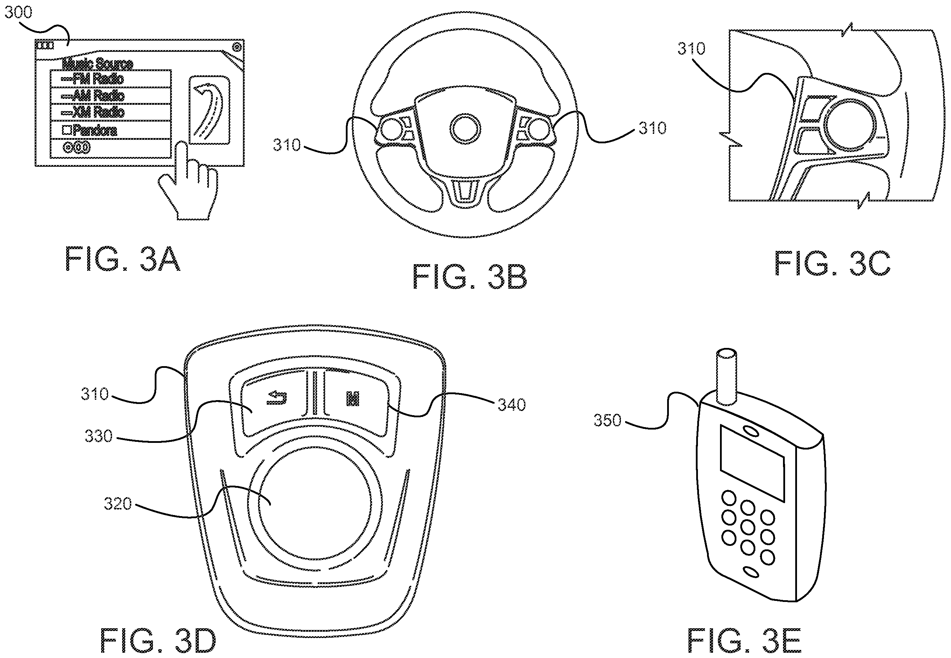

Referring now to FIGS. 3A-3F, multiple input apparatuses for an audio-visual system are shown, according to some embodiments of the present invention. FIG. 3A shows a touchscreen display 300 that may be a form of input apparatus for audio-visual system 100. FIG. 3B shows a steering wheel assembly containing at least one user input apparatus 310. FIG. 3C shows user input apparatus 310 attached to a steering wheel assembly in further detail.

FIG. 3D shows user input apparatus 310 in further detail. As shown, user input apparatus 310 contains a touch sensor 320, a hardkey 330, and a hardkey 340. Touch sensor 320 may be a device configured to detect physical contact or proximity, especially with a user's fingers, and process the detected information into electrical signals. Hardkey 330 and hardkey 340 may be any sort of physical button or key. In some embodiments, hardkey 330 and hardkey 340 are physical buttons that may be depressed by a user in order to generate an electrical signal within user input apparatus 310.

FIG. 3E shows a hand held device 350 that may be used to communicate with audio-visual system 100. In some embodiments, hand held device 350 may be used to send control signals to audio-visual system 100 in order to control functionality of audio-visual system 100.

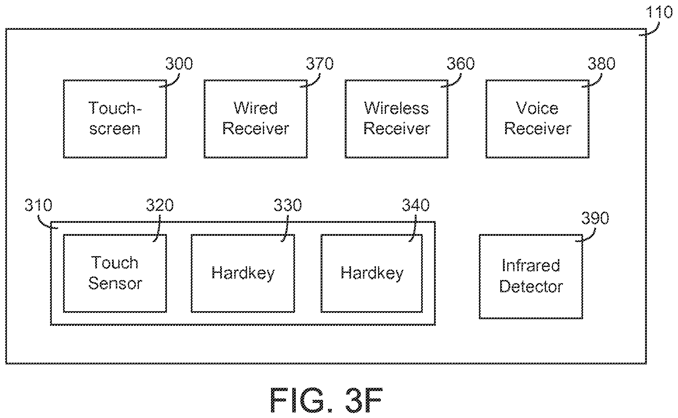

FIG. 3F shows the features of audio-visual system 100 just discussed in block diagram form. As shown, input devices 110 of audio-visual system 100 may contain touchscreen 300, user input apparatus 310, touch sensor 320, hardkey 330, and hardkey 340. Additionally, input devices 110 may contain a wired receiver 370 and a wireless receiver 360 for receiving signals from hand held device 350. Furthermore, input devices 110 may contain a voice receiver 380 for detecting and processing audible voice input from a user. Additionally input devices 110 may contain an infrared detector 390 that detects gestures by a user in automobile 1, such as particular hand movements or arm gestures. In such cases, input devices 110 may additionally include an infrared transmitter in order for infrared detector 390 to detect user gestures through disruptions in the infrared field.

The depiction of audio-visual system 100 as shown in the preceding figures is exemplary, and other embodiments are foreseeable. By example, audio-visual system 100 may have fewer or more input apparatuses than those shown in the previous figures. As a further example, audio-visual system 100 may have different types of input apparatuses that are known in the art. User input apparatus 310 may be configured differently to have more or fewer hardkeys, more or fewer touch sensors, etc. Hand held device 350 may be implemented as any electronic device capable of communicating electronically with audio-visual system 100. For instance, hand held device 350 may be a smartphone, a PDA, a tablet computer, a laptop computer, etc. Wireless receiver 360 may be provided using a variety of technologies known in the art to communicate with hand held device 350. For instance, wireless receiver 360 may support infrared communication, Bluetooth communication, ZigBee communication, Wi-Fi communication, etc. Wired receiver 370 may be provided using a variety of technologies known in the art to communicate with hand held device 350. For instance, wired receiver 370 may support a USB interface.

According to some embodiments of the present invention, audio-visual system 100 may be configured to simultaneously display output from multiple applications running in parallel at the same time on a single display apparatus. Audio-visual system 100 may allow each such application to have a dedicated portion of the display apparatus in which it can display information associated with the application. Such a portion will be discussed as a virtual operating field or operating field throughout this disclosure. The following embodiments disclose various ways in which such a display apparatus could be configured to allow such simultaneous display.

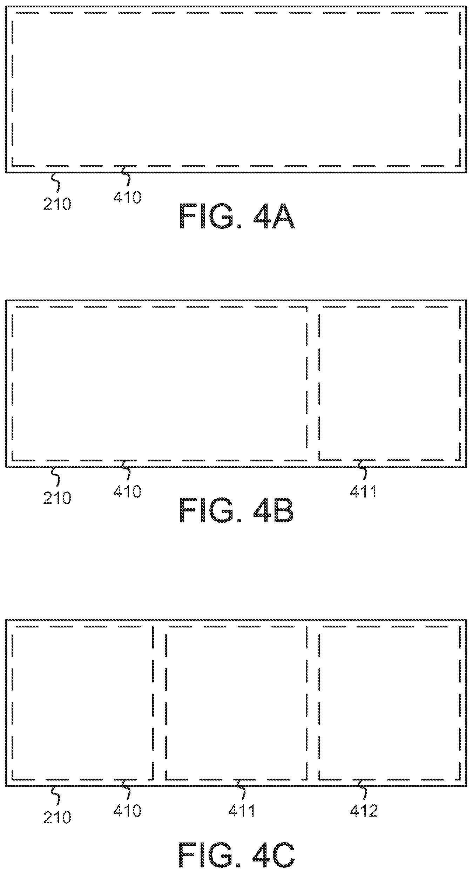

Referring now to FIGS. 4A-4F, virtual operating fields on a display apparatus are shown, according to some embodiments of the present invention. These figures show such a configuration based on an exemplary CID 210. For CID 210, it may be advantageous to support multiple virtual operating fields, such as three virtual operating fields as shown in these figures. However, if only one application is running or if only one application is otherwise outputting information to a display apparatus, only a single virtual operating field may be required.

FIG. 4A shows such a situation where a single virtual operating field 410 is provided covering essentially the entire display field of CID 210. In this case, because only one application is outputting information to CID 210, it is advantageous to allow that application's virtual operating field 410 to cover the entire space of the display apparatus so as to allow display of more information or the same information in better detail.

FIG. 4B shows a situation where two applications are displaying information on CID 210. Here, two virtual operating fields 410 and 411 are provided. As shown, one virtual operating field 410 covers approximately 2/3 of the entire display field of CID 210, while the other virtual operating field 411 covers approximately 1/3 of the entire display field of CID 210.

FIG. 4C shows a situation where three applications are displaying information on CID 210. Here, three virtual operating fields 410, 411, and 412 are provided. As shown, each virtual operating field 410, 411, and 412 cover approximately 1/3 of the entire display field of CID 210.

The disclosure of virtual operating fields in the preceding figures is exemplary, and other embodiments are foreseeable. By example, a display apparatus such as CID 210 may support more than three virtual operating fields, such as four, five, or more. Additionally, when multiple virtual operating fields are present on a display apparatus, the portions of the total display field provided for each virtual operating field may be different than that disclosed above. For instance, with two virtual operating fields provided on a display apparatus, each virtual operating field may cover approximately 1/2 of the entire display field. By further example, though vertical partitioning of the display field is shown in the preceding figures, virtual operating fields can be provided using other partitioning techniques, such as horizontal partitioning of the display field, a mix of horizontal and vertical partitioning, or some other technique.

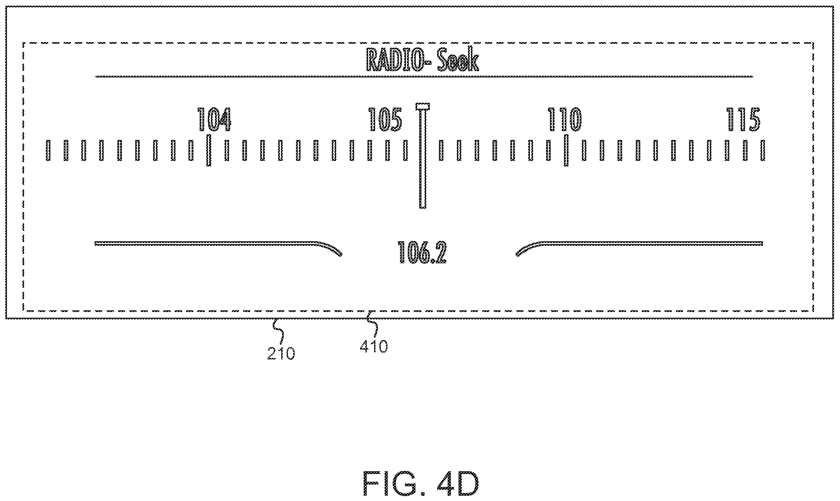

FIGS. 4D-4F show examples of the use of virtual operating fields with information provided by software applications. In FIG. 4D, a single application is providing information for display on CID 210. This application is a radio application, where the information displayed is a radio dial for seeking a radio frequency in the FM band. As shown, with only the radio application providing information for display on CID 210, a single operating field 410 is provided covering substantially all of the display field of CID 210.

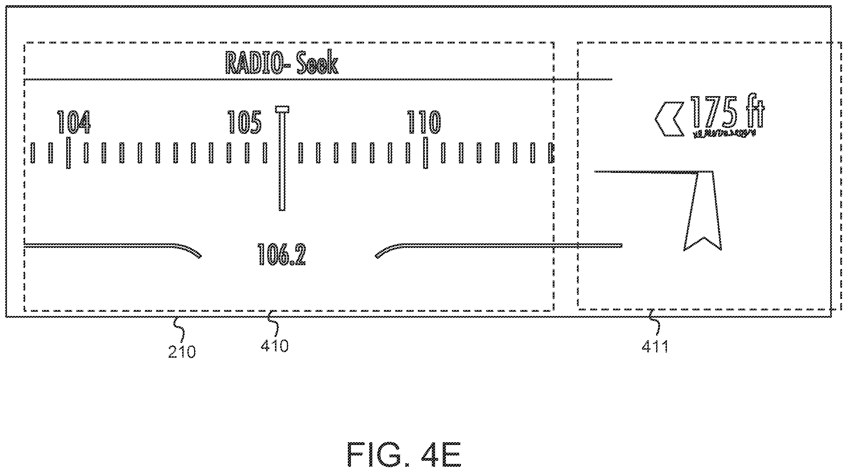

In FIG. 4E, both the radio application and a navigation application are providing information for display on CID 210. As such, the radio application information is displayed in virtual operating field 410 while the navigation application information is displayed in virtual operating field 411.

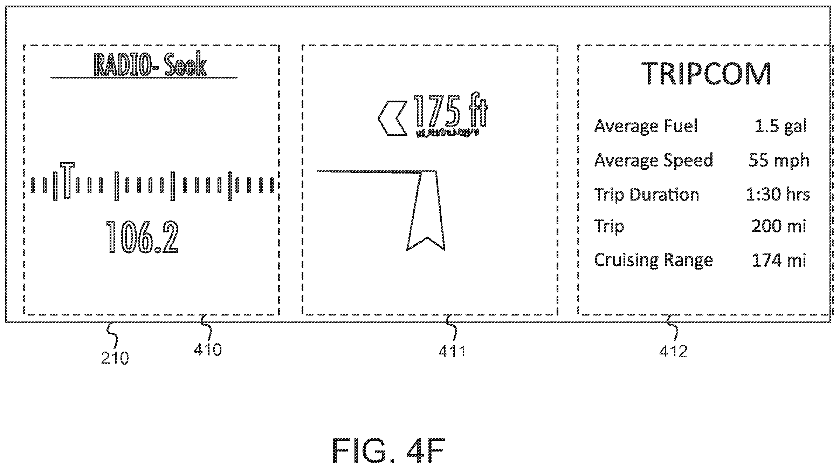

In FIG. 4F, the radio application, the navigation application, and a trip application (providing details about the current trip) are providing information for display on CID 210. As such, the radio application information is displayed in virtual operating field 410, the navigation application information is displayed in virtual operating field 411, and the trip application information is displayed in virtual operating field 412.

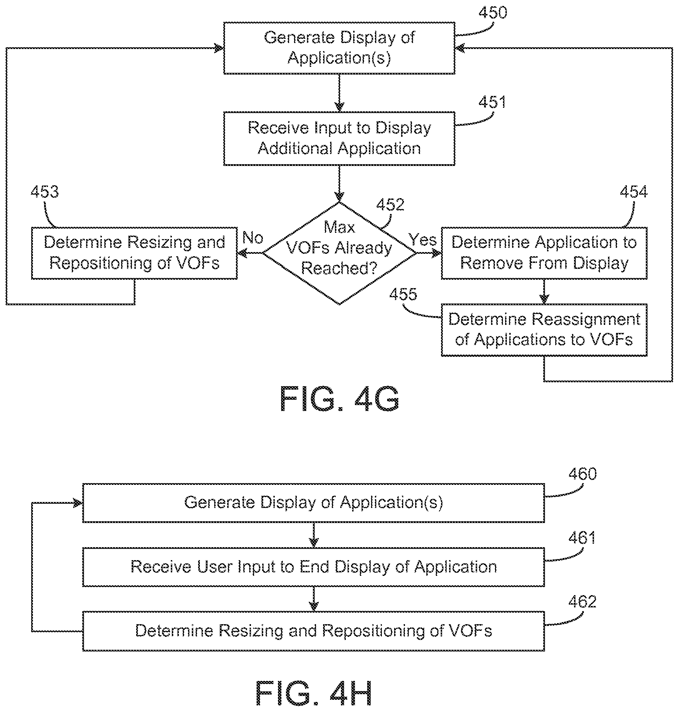

FIGS. 4G-4H show processes for changing the applications that are displayed on a display apparatus, according to some embodiments of the present invention. The process of FIG. 4G begins at step 450 when audio-visual system 100 generates a display of information for zero or more applications. In this step, some previous selection of applications has taken place, and those applications are assigned to virtual operating fields on a display apparatus, and information for those applications is being displayed. In some cases, no applications are being displayed, in which case there are zero virtual operating fields on the display apparatus.

At step 451, audio-visual system 100 receives an input instructing audio-visual system 100 to display information for an application that is not currently being displayed on the display apparatus. This input may be based on a user input, a system trigger, an input from some other system, or otherwise. For example, the input may be provided by a driver wishing to receive navigation assistance, to change a radio station, etc., may be triggered based on a vehicle warning, may be triggered by an incoming phone call on the hand held device, or otherwise. Audio-visual system 100 receives the input and processes it to determine that an additional application should be displayed that currently is not being displayed.

At step 452, audio-visual system 100 determines whether the predetermined maximum number of virtual operating fields for the display apparatus is already being used. Audio-visual system 100 may perform this determination by retrieving the predetermined maximum number of virtual operating fields from memory and comparing it to a count of currently used virtual operating fields. In the case where the maximum number of virtual operating fields has not already been reached, audio-visual system 100 will display the new application in addition to all applications already being displayed.

At step 453, audio-visual system 100 determines how to resize and reposition the already used virtual operating fields in order to accommodate the addition of another virtual operating field for the new application. This step may involve audio-visual system 100 applying a predefined set of rules for how to resize and reposition the existing virtual operating fields. For instance, audio-visual system 100 may identify the current arrangement of virtual operating fields as one of a finite number of potential configurations for the display apparatus. Audio-visual system 100 may then review a transition table that defines what configuration to transition to based on the current configuration and the action of adding another virtual operating field.

In some embodiments, step 453 includes determining a configuration based on the importance of the various applications (e.g., if one of the applications relates to a warning, if some applications are more critical to vehicle operation than others, etc.). Based on this analysis, audio-visual system 100 determines how the virtual operating fields on the display device should be arranged and which applications will display information in which virtual operating fields. Based on these determinations, audio-visual system 100 then regenerates the display of applications in step 450.

In the case where the maximum number of virtual operating fields has already been reached in step 452, audio-visual system 100 may terminate the display of one currently displayed application in order to free up a virtual operating field for display of the new application.

At step 454, audio-visual system 100 determines which application that is currently being displayed should no longer be displayed. This determination may involve the application of rules or heuristics, such as determining which application has passed the longest time without interaction with the user, which application has a lowest predetermined priority level, which application shares a functional area with the new application, which application is currently in an idle state, querying the user for which application to no longer display, or some other determination mechanism. Based on this analysis, audio-visual system 100 identifies an application that is currently being displayed but will cease to be displayed in the next display generation.

At step 455, audio-visual system 100 determines how to reassign the applications that will continue to be displayed to the virtual operating fields that are in use. Audio-visual system 100 will use the determination from step 454 of the application whose display will be terminated to identify a now unused virtual operating field. Audio-visual system 100 may apply rules or heuristics to determine how to reassign the applications that will continue to be displayed and the new application to the virtual operating fields. For instance, audio-visual system 100 may shift the assignment of an application that is to the right of the unused virtual operating field to be displayed in the unused operating field, thus performing a left-shift of the application. Audio-visual system 100 may continue this left-shift for applications displayed on the display apparatus until the rightmost virtual operating field is unused. Audio-visual system 100 would then assign the new application to be displayed in the rightmost virtual operating field. Alternatively, audio-visual system 100 may simply assign the new application to be displayed in the virtual operating field that is now unused but was previously used by the removed application. A variety of other techniques may be used. Once the new assignment of applications to virtual operating fields is determined, audio-visual system 100 then regenerates the display of applications in step 450.

The process of FIG. 4H begins at step 460 when audio-visual system 100 generates a display of information for one or more applications. In this step, some previous selection of applications has taken place, and those applications are assigned to virtual operating fields on a display apparatus, and information for those applications is being displayed.

At step 461, audio-visual system 100 receives an input instructing audio-visual system 100 to end display of information for a particular application that is currently being displayed on the display apparatus. This input may be based on a user input, a system trigger, an input from some other system, or otherwise. For example, the input may be based on the conclusion of a phone call (when the telephone application is being displayed), a menu selection from the user (e.g., when the user has selected a vehicle setting, radio channel, etc.), a user acknowledgement of a vehicle warning, or otherwise. The audio-visual system 100 receives the input and processes it to determine that an application that is currently displayed should no longer be displayed.

At step 462, audio-visual system 100 determines how to resize and reposition the virtual operating fields that will remain in use once one of the virtual operating fields is removed. This step may involve audio-visual system 100 applying a predefined set of rules for how to resize and reposition the remaining virtual operating fields. For instance, audio-visual system 100 may identify the current arrangement of virtual operating fields as one of a finite number of potential configurations for the display apparatus. Audio-visual system 100 may then review a transition table that defines what configuration to transition to based on the current configuration and the action of removing a virtual operating field.

In some embodiments, audio-visual system 100 determines which of the remaining virtual operating fields will consume the space freed up by the removed virtual operating field in the case where more than one virtual operating field will remain. In such a case, audio-visual system 100 may choose the virtual display field for the application that has most recently been interacted with by the user or that currently has the focus. Based on this analysis, audio-visual system 100 determines how the virtual operating fields on the display device should be arranged and which applications will display information in which virtual operating fields. As another example, audio-visual system 100 may determine a new application to insert in the vacated virtual operating field, based on typical vehicle application use. Based on these determinations, audio-visual system 100 then regenerates the display of applications in step 460.

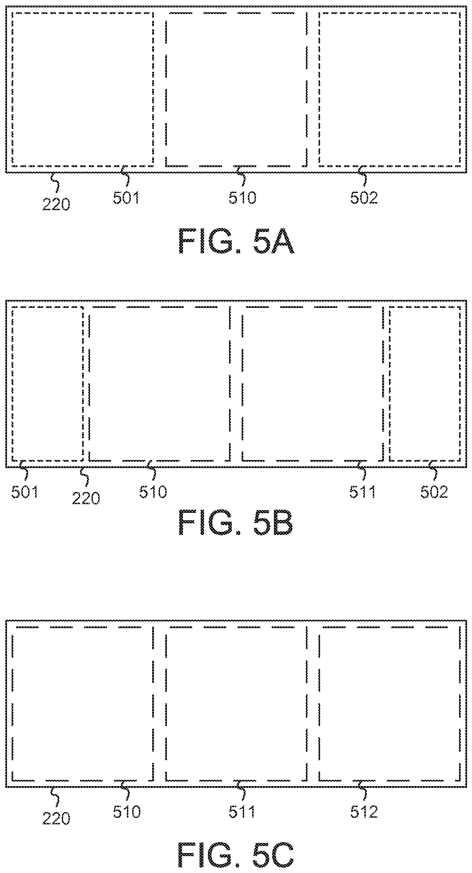

Referring now to FIGS. 5A-5C, virtual operating fields on a display apparatus are shown, according to some embodiments of the present invention. These figures show such a configuration based on an exemplary ICD 220. For ICD 220, it may be advantageous to support multiple virtual operating fields, such as three virtual operating fields as well as reserved space as shown in these figures. However, if only one application is running or if only one application is otherwise outputting information to a display apparatus, only a single virtual operating field may be required. Nonetheless, reserved space may be maintained with one or more virtual operating fields present.

FIG. 5A shows such a situation where a single virtual operating field 510 is provided covering approximately 1/3 of the display field of ICD 220. The remainder of the display field of ICD 220 is covered by reserved space 501 and reserved space 502. Reserved space 501 and reserved space 502 may be used to display important information to a driver of the automobile, and as such the space may be reserved for display even if an application is providing information for display on ICD 220. As such, even though only one application is outputting information to ICD 220, the application's virtual operating field 510 covers only approximately 1/3 of the display field so that reserved space 501 and reserved space 502 can display other information.

FIG. 5B shows a situation where two applications are displaying information on ICD 220. Here, two virtual operating fields 510 and 511 are provided. As shown, each virtual operating field 510 and 511 covers approximately 1/3 of the entire display field of ICD 220. The remaining 1/3 of the display field of ICD 220 is split between reserved space 501 and reserved space 502, which each cover approximately 1/6 of the entire display field of ICD 220.

FIG. 5C shows a situation where three applications are displaying information on ICD 220. Here, three virtual operating fields 510, 511, and 512 are provided. As shown, each virtual operating field 510, 511, and 512 cover approximately 1/3 of the entire display field of ICD 220. In this situation, reserved space 501 and reserved space 502 are no longer displayed because there is not sufficient space to display them.

The disclosure of virtual operating fields in the preceding figures is exemplary, and other embodiments are foreseeable. By example, a display apparatus such as ICD 220 may support more than three virtual operating fields, such as four, five, or more. Additionally, when multiple virtual operating fields are present on a display apparatus, the portions of the total display field provided for each virtual operating field may be different than that disclosed above. For instance, with two virtual operating fields provided on a display apparatus, each virtual operating field may cover approximately 1/2 of the entire display field. By further example, though vertical partitioning of the display field is shown in the preceding figures, virtual operating fields can be provided using other partitioning techniques, such as horizontal partitioning of the display field, a mix of horizontal and vertical partitioning, or some other technique. By further example, reserved space 501 and 502 may continue to be displayed even when three or more virtual operating fields are displayed on a display apparatus such as ICD 220. Additionally, a maximum number of virtual display fields may be set, such as at one or two, so that there is always sufficient space to display reserved space 501 and 502.

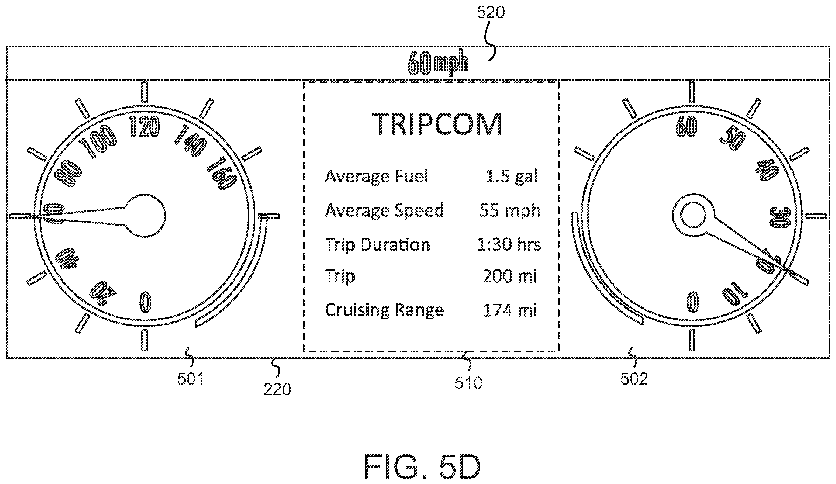

Referring now to FIGS. 5D-5F, several examples of the use of virtual operating fields with information provided by software applications are shown, according to an exemplary embodiment. In FIG. 5D, a single first application is providing trip information for display on ICD 220. As shown, with only the first application providing trip information for display on ICD 220, a single operating field 510 is provided covering approximately 1/3 of the display field of ICD 220. Reserved space 501 displays road speed information using a speedometer dial. Reserved space 502 displays engine speed information using a revolutions per minute dial. Additionally, a status bar 520 is provided horizontally along the top of the display field of ICD 220. The status bar 520 may display additional information to the driver of the automobile.

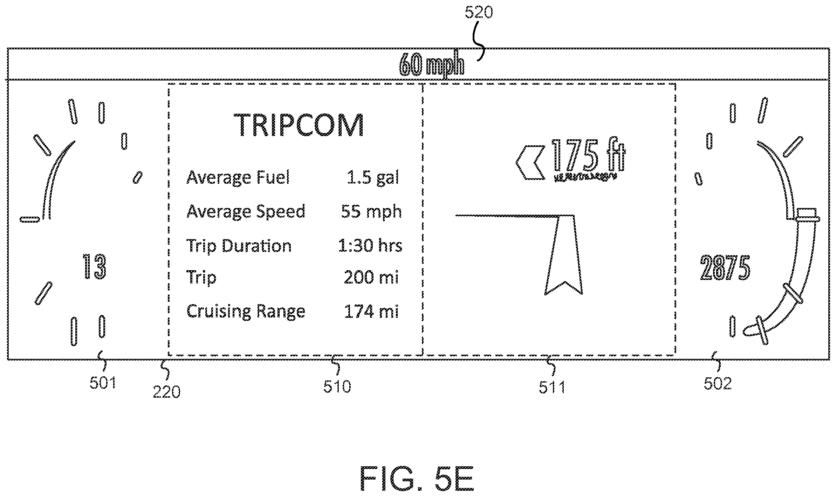

In FIG. 5E, both the trip application and a navigation application are providing information for display on ICD 220. As such, the trip application information is displayed in virtual operating field 510 while the navigation application information is displayed in virtual operating field 511. Additionally, reserved space 501 continues to display road speed information, but using a visual representation that is more compact so at to fit in the reduced display space provided to reserved space 501. Similarly, reserved space 502 continues to display engine speed information, but using a visual representation that is more compact so at to fit in the reduced display space provided to reserved space 502. Status bar 520 is also provided in this example.

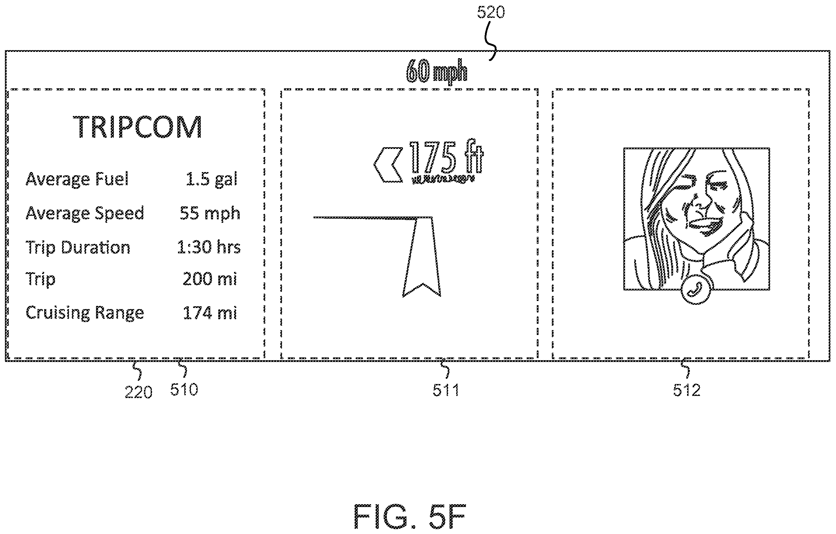

In FIG. 5F, the trip application, the navigation application, and a telephone application are providing information for display on ICD 220. As such, the trip application information is displayed in virtual operating field 510, the navigation application information is displayed in virtual operating field 511, and the telephone application information is displayed in virtual operating field 512. Status bar 520 is also provided in this example. In this example, because road speed and engine speed information is not otherwise displayed, one or both may be displayed in status bar 520 so that the information continues to be available to the driver of the automobile.

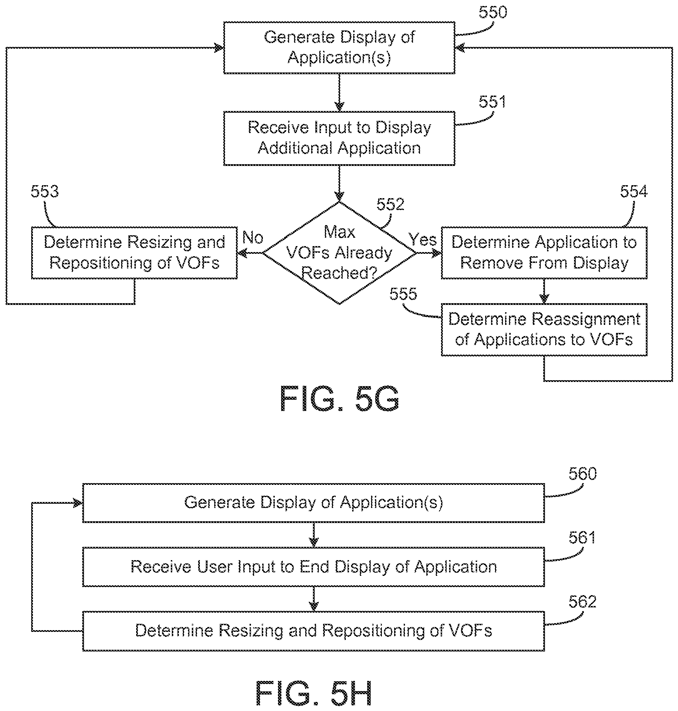

Referring now to FIGS. 5G-5H, processes for changing the applications that are displayed on a display apparatus are shown, according to some embodiments of the present invention. The process of FIG. 5G begins at step 550 when audio-visual system 100 generates a display of information for zero or more applications. This display of information may include zero or more reserved space portions. In this step, some previous selection of applications has taken place, and those applications are assigned to virtual operating fields on a display apparatus, and information for those applications is being displayed. In some cases, no applications are being displayed, in which case there are zero virtual operating fields on the display apparatus, but reserved space portions may still display other information.

At step 551, audio-visual system 100 receives an input instructing audio-visual system 100 to display information for an application that is not currently being displayed on the display apparatus. This input may be based on a user input, a system trigger, an input from some other system, or otherwise. For example, the input may be provided by a driver wishing to receive navigation assistance, to change a radio station, etc., may be triggered based on a vehicle warning, may be triggered by an incoming phone call on the hand held device, or otherwise. The audio-visual system 100 receives the input and processes it to determine that an additional application should be displayed that currently is not being displayed.

At step 552, audio-visual system 100 determines whether the predetermined maximum number of virtual operating fields for the display apparatus is already being used. Audio-visual system 100 may perform this determination by retrieving the predetermined maximum number of virtual operating fields from memory and comparing it to a count of currently used virtual operating fields. In the case where the maximum number of virtual operating fields has not already been reached, audio-visual system 100 will display the new application in addition to all applications already being displayed.

At step 553, audio-visual system 100 determines how to resize and reposition the already used virtual operating fields in order to accommodate the addition of another virtual operating field for the new application. This step may involve the audio-visual system 100 applying a predefined set of rules for how to resize and reposition the existing virtual operating fields.

In some embodiments, step 553 includes taking into account any resizing or repositioning of reserved space that may be possible. For instance, audio-visual system 100 may identify the current arrangement of virtual operating fields and reserved space as one of a finite number of potential configurations for the display apparatus. Audio-visual system 100 may then review a transition table that defines what configuration to transition to based on the current configuration and the action of adding another virtual operating field.

In some embodiments, step 553 includes determining a configuration based on the importance of the various applications (e.g., if one of the applications relates to a warning, if some applications are more critical to vehicle operation than others). Based on this analysis, audio-visual system 100 determines how the virtual operating fields on the display device should be arranged and which applications will display information in which virtual operating fields. Based on these determinations, audio-visual system 100 then regenerates the display of applications in step 550.

In the case where the maximum number of virtual operating fields has already been reached in step 552, audio-visual system 100 may terminate the display of one currently displayed application in order to free up a virtual operating field for display of the new application.

At step 554, audio-visual system 100 determines which application that is currently being displayed should no longer be displayed. This determination may involve the application of rules or heuristics, such as determining which application has passed the longest time without interaction with the user, which application has a lowest predetermined priority level, which application shares a functional area with the new application, which application is currently in an idle state, querying the user for which application to no longer display, or some other determination mechanism. Based on this analysis, audio-visual system 100 identifies an application that is currently being displayed but will cease to be displayed in the next display generation.

In some embodiments, certain virtual operating fields may not be changed and/or the application associated with a virtual operating field may not be terminated. For example, an application displaying critical information such as road speed, engine speed, warnings, etc. may be configured such that a user may not terminate the display of information. In some embodiments, a user is able to reposition the virtual operating fields associated with the critical information but may not remove the virtual operating field from all displays.

At step 555, audio-visual system 100 determines how to reassign the applications that will continue to be displayed to the virtual operating fields that are in use. Audio-visual system 100 will use the determination from step 554 of the application whose display will be terminated to identify a now unused virtual operating field. Audio-visual system 100 may apply rules or heuristics to determine how to reassign the applications that will continue to be displayed and the new application to the virtual operating fields. For instance, audio-visual system 100 may shift the assignment of an application that is to the right of the unused virtual operating field to be displayed in the unused operating field, thus performing a left-shift of the application.

In some embodiments, audio-visual system 100 continues this left-shift for applications displayed on the display apparatus until the rightmost virtual operating field is unused. Audio-visual system 100 would then assign the new application to be displayed in the rightmost virtual operating field. Alternatively, audio-visual system 100 may simply assign the new application to be displayed in the virtual operating field that is now unused but was previously used by the removed application. A variety of other techniques may be used. Once the new assignment of applications to virtual operating fields is determined, audio-visual system 100 then regenerates the display of applications in step 550.

The process of FIG. 5H begins at step 560 when audio-visual system 100 generates a display of information for one or more applications. In this step, some previous selection of applications has taken place, and those applications are assigned to virtual operating fields on a display apparatus, and information for those applications is being displayed. Additionally, information may be displayed in reserved space on the display apparatus.

At step 561, audio-visual system 100 receives an input instructing audio-visual system 100 to end display of information for a particular application that is currently being displayed on the display apparatus. This input may be based on a user input, a system trigger, an input from some other system, or otherwise. For example, the input may be based on the conclusion of a phone call (when the telephone application is being displayed), a menu selection from the user (e.g., when the user has selected a vehicle setting, radio channel, etc.), a user acknowledgement of a vehicle warning, or otherwise. The audio-visual system 100 receives the input and processes it to determine that an application that is currently displayed should no longer be displayed.

At step 562, audio-visual system 100 determines how to resize and reposition the virtual operating fields that will remain in use once one of the virtual operating fields is removed as well as the reserved space that may remain in use or be put into use once one of the virtual operating fields is removed. This step may involve audio-visual system 100 applying a predefined set of rules for how to resize and reposition the remaining virtual operating fields and reserved space. For instance, audio-visual system 100 may identify the current arrangement of virtual operating fields and reserved space as one of a finite number of potential configurations for the display apparatus. Audio-visual system 100 may then review a transition table that defines what configuration to transition to based on the current configuration and the action of removing a virtual operating field.

In some embodiments, audio-visual system 100 determines which of the remaining virtual operating fields or reserved space will consume the space freed up by the removed virtual operating field in the case where more than one virtual operating field and/or reserved space will remain. In such a case, audio-visual system 100 may choose the virtual display field for the application that has most recently been interacted with by the user or that currently has the focus, or may choose to split the newly freed up space between the reserved space. Based on this analysis, audio-visual system 100 determines how the virtual operating fields and reserved space on the display device should be arranged and which applications will display information in which virtual operating fields. As another example, audio-visual system 100 may determine a new application to insert in the vacated virtual operating field, based on typical vehicle application use. Based on these determinations, audio-visual system 100 then regenerates the display of applications in step 560.

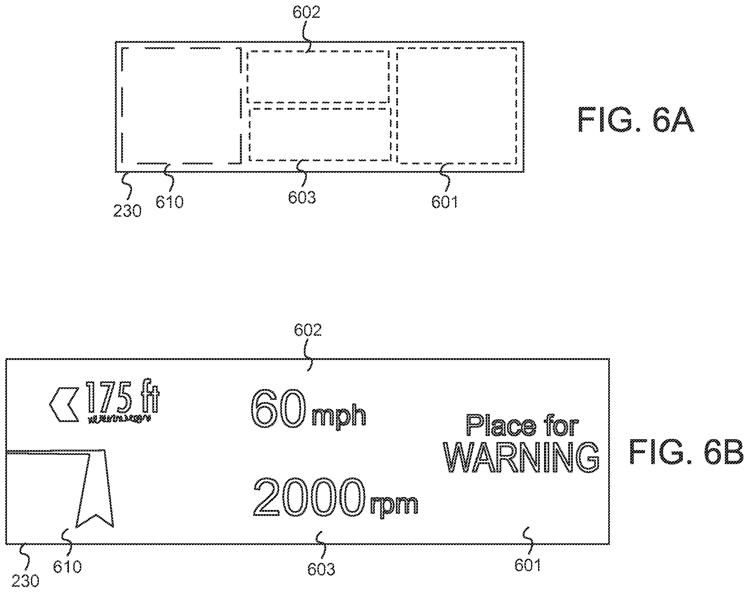

Referring now to FIGS. 6A-6B, virtual operating fields on a display apparatus are shown, according to some embodiments of the present invention. These figures show such a configuration based on an exemplary HUD 230. For HUD 230, it may be advantageous to support at least one virtual operating field, as well as reserved space as shown in these figures.

FIG. 6A shows such a situation where a single virtual operating field 610 is provided covering approximately 1/3 of the display field of HUD 230. The remainder of the display field of HUD 230 is covered by reserved space 601, reserved space 602, and reserved space 603. Reserved space 601, 602, and 603 may be used to display important information to a driver of the automobile, and as such the space may be reserved for display even if an application is providing information for display on HUD 230.

In FIG. 6B, a single navigation application is providing information for display on HUD 230. As shown, with only the navigation application providing information for display on HUD 230, a single operating field 610 is provided covering approximately 1/3 of the display field of HUD 230. Reserved space 601 displays warning information as to potential issues with the automobile that the driver should be aware of. Reserved space 601 may remain present but empty if no warnings are available at a given point in time. Reserved space 602 displays road speed information by displaying a numerical value of the miles per hour that the automobile is traveling. Reserved space 603 displays engine speed information using by displaying a numerical value of the revolutions per minute for the automobile's engine.

The disclosure of virtual operating fields in the preceding figures is exemplary, and other embodiments are foreseeable. By example, when no warning information is available, reserved space 601 may disappear, allowing reserved space 602 and reserved space 603 to be enlarged. By further example, when no application is providing information for display on HUD 230, virtual operating space 610 may disappear, allowing reserved space 602 and reserved space 603 to be enlarged. In other embodiments, virtual operating space 610 and reserved space 601, 602, and 603 may be fixed in size and position even if no information is provided for displays in those section. This can be advantageous in reducing the distraction of the driver of the automobile as would otherwise be caused by resizing and repositioning of the display fields of HUD 230. Additionally, the virtual operating fields and reserved space provided for HUD 230 may be arranged in different proportions and different positions. HUD 230 may be controlled in a similar manner to CID 210 and ICD 220 as shown above. The processes of FIGS. 4G-4H and of FIGS. 5G-5H may be adapted to control HUD 230 display.

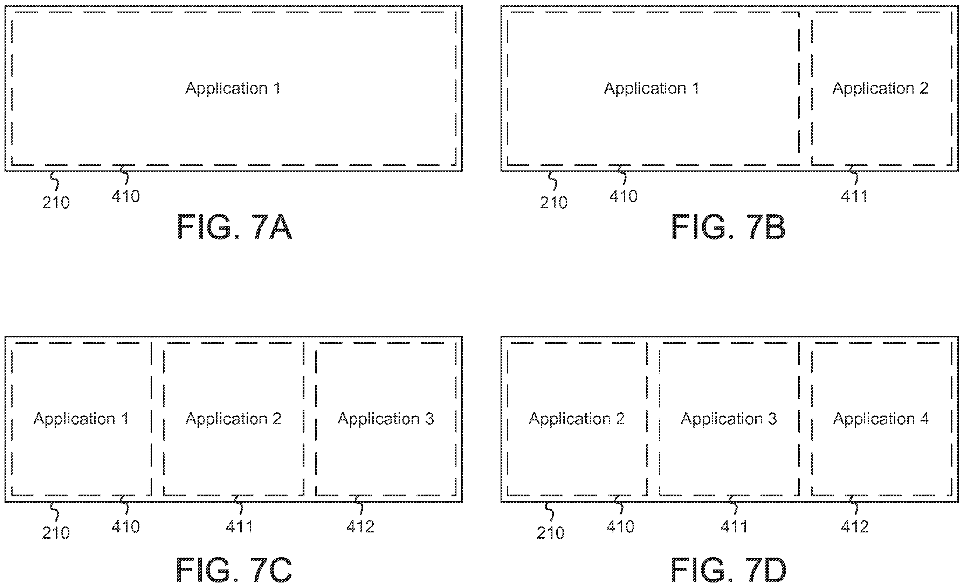

Referring now to FIGS. 7A-7D, the assignment of virtual operating fields to applications is shown, according to some embodiments of the present invention. In particular, this set of figures shows a progression as new applications begin providing content for display on a display apparatus, in this case an exemplary CID 210. FIG. 7A shows that a single application, Application 1, is providing information for display on CID 210, so a single virtual operating field 410 is provided.

In FIG. 7B, a second application, Application 2, is now providing information for display on CID 210, so two virtual operating fields 410 and 411 are provided. In particular, Application 1 has the larger virtual operating field 410 and virtual operating field 410 has shifted to the left of virtual operating field 411. In other embodiments, virtual operating fields 410 and 411 may have the same size or be of a different configuration.

In FIG. 7C, a third application, Application 3, is now providing information for display on CID 210, so three virtual operating fields 410, 411, and 412 are provided. In particular, Application 1 is assigned to virtual operating field 410, which has shifted to be the leftmost. Application 2 is assigned to virtual operating field 411, which has shifted to be in the middle position. Application 3 is assigned to virtual operating field 412, and virtual operating field 412 has entered in the leftmost position.

In FIG. 7D, a fourth application, Application 4, is now providing information for display on CID 210. In this example, a fourth virtual operating field is not permitted, so three virtual operating fields 410, 411, and 412 remain provided. Because Application 1 was the oldest introduced, it is no longer provided a virtual operating field and thus information as to that application is no longer displayed on CID 210. Each of Application 2 and Application 3 shift one virtual operating field to the left, and Application 4 is assigned to the rightmost virtual operating field. In this way, a display apparatus in some embodiments of the present invention can be configured to provide a predictable behavior as to how applications will be simultaneously displayed as applications begin and end providing information for display on the display apparatus.

The disclosure display apparatus in the preceding figures is exemplary, and other embodiments are foreseeable. By example, a maximum number of virtual operating fields may be different than three, or no maximum may be provided. By additional example, when choosing which application will no longer be assigned to a virtual operating field, various factors can be considered in making the decision, such as which was first provided a virtual operating space, which was most recently provided a virtual operating space, which was least recently interacted with by the user, which one does the user select to no longer be displayed, which one shares a functional area with the newly displayed application, which has the highest or lowest priority, etc.

According to some embodiments of the present invention, a virtual operating space, an item in a virtual operating space, or any other virtual object displayed on a display apparatus of audio-visual system 100 may have the focus at some point in time. The focus in the system is a graphical element that indicates the virtual operating space, item, or other virtual object with which the user can presently interact. As such, the focus is similar to a cursor or other indicator as to which item will receive the input entered by the user if such input is entered. The user and the system may change the focus in a variety of ways discussed later in this disclosure.

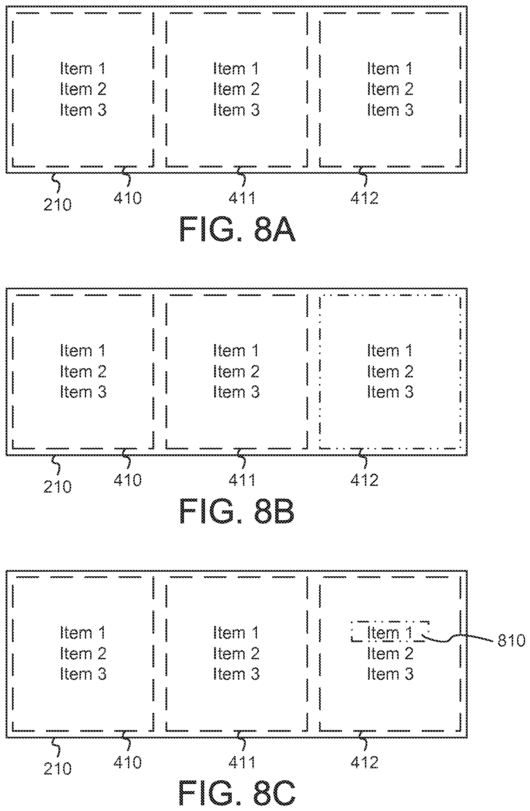

Referring now to FIGS. 8A-8C, the changing of focus on virtual operating spaces and items in those spaces is shown, according to some embodiments of the present invention. FIG. 8A shows an exemplary CID 210 with virtual operating spaces 410, 411, and 412. Each virtual operating space 410, 411, and 412 contains various items within its display space. In this example, the focus is not on any of the virtual operating spaces and is thus inactive.

In FIG. 8B, the focus is on virtual operating space 412, as indicated by the different line dashing in the figure. The focus has changed from nothing to virtual operating space 412 by some action of the user or system (e.g., a user tap on a sensor or a hardkey).

In FIG. 8C, the focus is on Item 1 810 in the display space of virtual operating space 412. The focus has changed to Item 1 810 by some action of the user or system (e.g., a user upward or downward swipe on a sensor).

The disclosure as to the display apparatus in the preceding figures is exemplary, and other embodiments are foreseeable. By example, a variety of techniques may be used to show where the focus is at any point in time, such as text coloring, shadowing, text highlighting, surrounding with colored objects, brightness, text size, etc. For example, the item or operating space in focus may be brighter compared to other items and spaces, may be of a different color, may feature a border or different border than other items and spaces, may have enlarged text, etc.

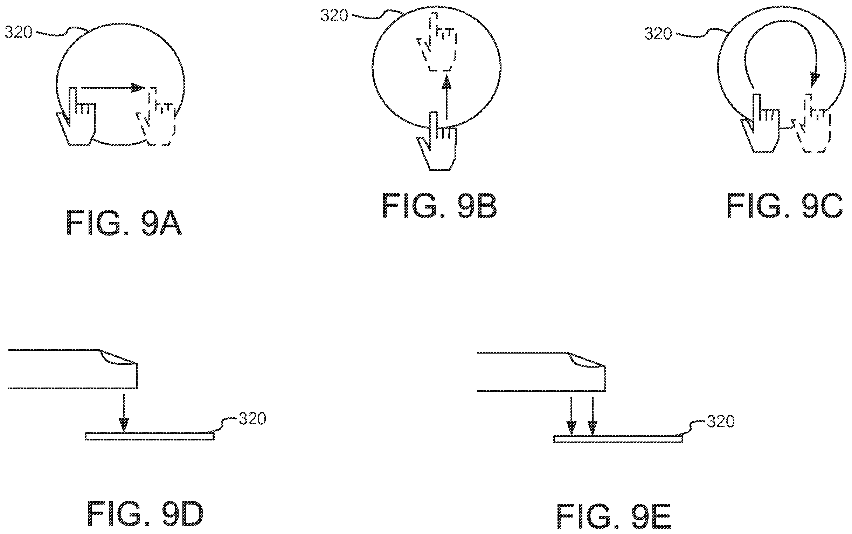

Referring now to FIGS. 9A-9E, user inputs at a touch sensor are shown, according to some embodiments of the present invention. As shown in FIG. 9A, a user may perform a horizontal swipe on or near the surface of touch sensor 320. As shown in FIG. 9B, a user may perform a vertical swipe on or near the surface of touch sensor 320. As shown in FIG. 9C, a user may perform a rotational swipe on or near the surface of touch sensor 320. As shown in FIG. 9D, a user may perform a single tap on or near the surface of touch sensor 320. As shown in FIG. 9E, a user may perform a double tap on or near the surface of touch sensor 320. The user may interact with touch sensor 320 to interact with the various displays as described in subsequent figures (e.g., to move up or down between menu options, to select a display or a component within a display, etc.).

The disclosure as to user inputs in the preceding figures is exemplary, and other embodiments are foreseeable. By example, a variety of other user inputs may be provided to the system, including pressing a hardkey, touching on or near the surface of a touchscreen display apparatus, voice inputs, etc.

According to some embodiments of the present invention, audio-visual system 100 receives inputs from a user via various input interfaces. These inputs are effective to allow the user to make selections of items in applications provided as part of audio-visual system 100. Such inputs may be received via a user interaction with a touch sensor (as shown in FIGS. 9A-9E), one or more hardkeys or other buttons (as shown in FIGS. 3B-3D), with a hand held device (as shown in FIG. 3E), one or more audio inputs from a microphone, or otherwise.

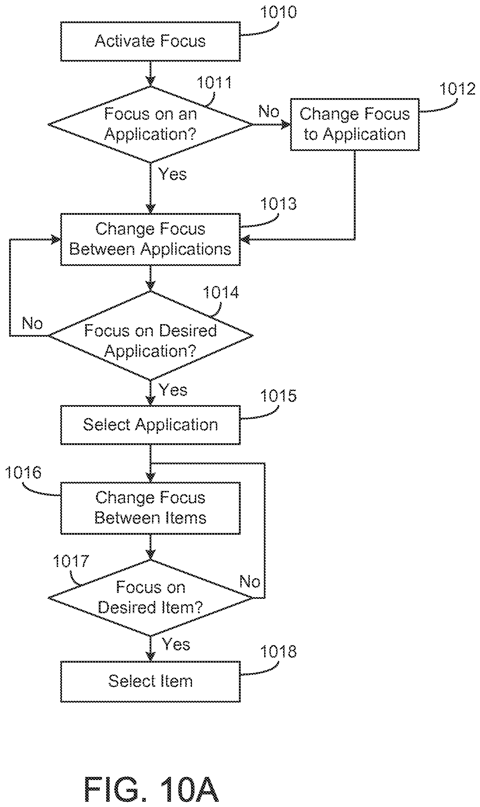

Referring now to FIGS. 10A-10I, several methods for receiving user input and making selections based on that input are shown, according to various embodiments of the present invention. Referring particularly to FIG. 10A, an exemplary process whereby a user can select an item in an application's display interface is shown. Starting at step 1010, the user may need to activate the focus in audio-visual system 100. The focus, as described above, may become inactive if the user does not interact with audio-visual system 100 for a predetermined period of time. Other events may also cause the focus to become inactive. If the focus is inactive, then the user may provide some input that activates the focus. When the focus is activated, it may default to some application or item in an application, such as the display feature on which the focus was most recently active In other embodiments, the focus may become active by a user focusing on a particular application display interface. In such a case, the display feature on which the focus is applied is the display feature the user has focused on. In further embodiments, the focus does not become inactive. In one embodiment, the focus remains active but the visual distinction of the focus is removed from the display after a certain period of inactivity. When a user changes the focus, the visually distinguishing characteristics of the focus may be displayed again.

At step 1011, if the focus after activation is on an item within an application, then it must be changed to the application level in step 1012. For example, referring also to FIG. 8C, step 1011 includes changing the focus from Item 1 810 to virtual operating space 412. If the focus after activation is on an application, then that step is not necessary. Once the focus is on an application, then the process continues at step 1013.

At step 1013, the user may need to change the focus between applications if the focus is not on the application that the user desires to interact with. In such a case, the user must provide some input that will cause the focus to change from the current application to the application the user desires to interact with. For example, the user may perform a left or right swipe on a touch sensor to change applications.

At step 1014, if the focus after changing between applications is still not on the desired application, then step 1013 must be repeated. If the focus after changing between applications is on the desired application, then the process continues at step 1015.

At step 1015, once the focus is on the application that the user desires to interact with, the user selects the application. By selecting the application, the focus passes to an item within the virtual operating field of the application. The selection of the application may be performed by the user based on an interaction with an input device, e.g., a hardkey.

At step 1016, the user may need to change the focus between items if the focus is not on the item that the user desires to interact with. In such a case, the user must provide some input that will cause the focus to change from the current item to the item the user desires to interact with. For example, such an input may include an upward or downward swipe on a touch sensor, or one or more button presses.

At step 1017, if the focus after changing between items is still not on the desired item, then step 1016 must be repeated. If the focus after changing between item is on the desired item, then the process continues at step 1018.

At step 1018, once the focus is on the item that the user desires to interact with, the user selects the item. By selecting the item, audio-visual system 100 may respond in a variety of ways, such as changing the state of some system object, indicating a change in state on the display apparatus, changing an interaction with some external system, etc. For example, the selection may change a radio station, change a destination for a navigation application, initiate or stop a phone call, or otherwise. At this point, the user has selected the desired item, so the process is complete.

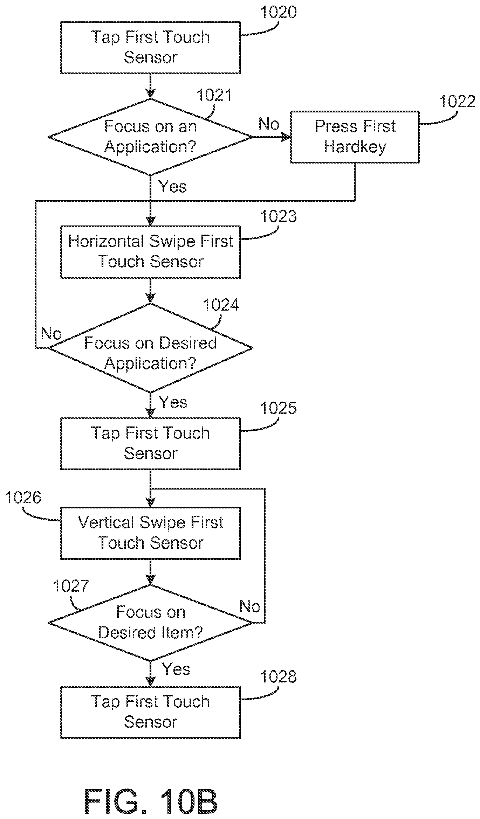

Referring particularly to FIG. 10B, an exemplary process of receiving user inputs whereby a user can select an item in an application's display interface is shown. In this example, reference is made to a first touch sensor and a first hardkey, such as touch sensor 320 and hardkey 330 provided on user input apparatus 310 of FIG. 3D.

Starting at step 1020, the user provides a single tap to the first touch sensor in order to activate the focus in audio-visual system 100. At this point, the focus is on some application or item within an application.

At step 1021, a determination is made as to whether the focus is on an application. If the focus is not on an application but rather an item in an application, the user presses the first hardkey at step 1022 to move the focus up one hierarchical level in whatever item or menu hierarchy the focus may currently be located. This is repeated until the focus is on an application.

At step 1023, the user performs a left or right horizontal swipe to move the focus between applications. Audio-visual system 100 may be aware of the directionality of the swipe, so that a leftward horizontal swipe moves the focus to the next application to the left and a rightward horizontal swipe moves the focus to the next application to the right.

At step 1024, a determination is made as to whether the focus is on the application that the user desires to interact with. If the focus is not so positioned, the user repeats the horizontal swipes of step 1023 until the desired application is reached by the focus.

At step 1025, the focus is on the desired application, so the user performs a single tap of the first touch sensor. By doing so, the focus passes to an item within the virtual operating field of the application.

At step 1026, the user performs an up or down vertical swipe to move the focus between items. Audio-visual system 100 may be aware of the directionality of the swipe, so that an upward vertical swipe moves the focus to the next higher item and a downward vertical swipe moves the focus to the next lower item.

At step 1027, a determination is made as to whether the focus is on the item that the user desires to interact with. If the focus is not so positioned, the user repeats the vertical swipes of step 1026 until the desired item is reached by the focus.

At step 1028, once the focus is on the item that the user desires to interact with, the user selects the item by performing a single tap of the first touch sensor. By selecting the item, audio-visual system 100 may respond in a variety of ways, such as changing the state of some system object, indicating a change in state on the display apparatus, changing an interaction with some external system etc. At this point, the user has selected the desired item, so the process is complete.

In some embodiments, the focus may be manipulated (e.g., changed between applications, changed between items of an application, deactivated, etc.) through a variety of user inputs. In one embodiment, a user may manipulate the focus using a variety of touch inputs such as the ones described with reference to FIGS. 9A-9E. For example, a horizontal or vertical swipe may cycle the focus between applications. In some embodiments, a gesture performed on one screen may cycle the focus through all displays. For example, a horizontal swipe on one display may move the focus from an application displayed on CID 210 to ICD 220.

In some embodiments, the focus may be manipulated with a series of hard keys. For example, buttons, knobs, dials, directional pads, joysticks, etc. may allow a user to manipulate the focus. Hard key controls may be located on the steering wheel, on or near the dashboard, on or near an instrument cluster, on or near a center counsel, embedded within seats for use by passengers, in arm rests, in head rests, etc. In some embodiments, touch controls may also be located in similar places. In further embodiments, touch inputs and/or hard key inputs may be used interchangeably to control the focus. In one embodiment, a user may tap a touch enabled display over the application and/or item on which focus is desired to focus on that feature. A user may press an application to focus on the application and press an item to focus on the item. In an additional embodiment, a user may manipulate the focus using voice commands or inputs on a mobile device connected to audio-visual system 100.

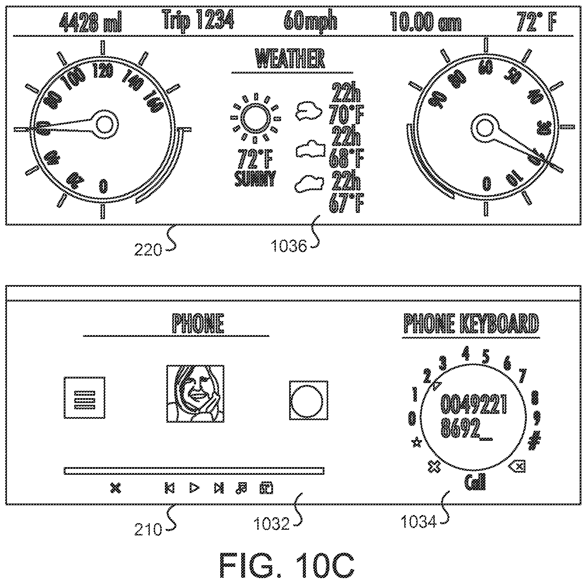

Referring particularly to FIGS. 10C-10I, an exemplary process of user inputs whereby a user can select a "1" digit on a phone keyboard is shown. The process illustrated in FIGS. 10C-10I may be executed by the processes of FIGS. 10A-10B. In this example, an exemplary CID 210 with a phone application 1032 and a phone keyboard application 1034 is shown. Additionally, an exemplary ICD 220 with a weather application 1036 is shown.

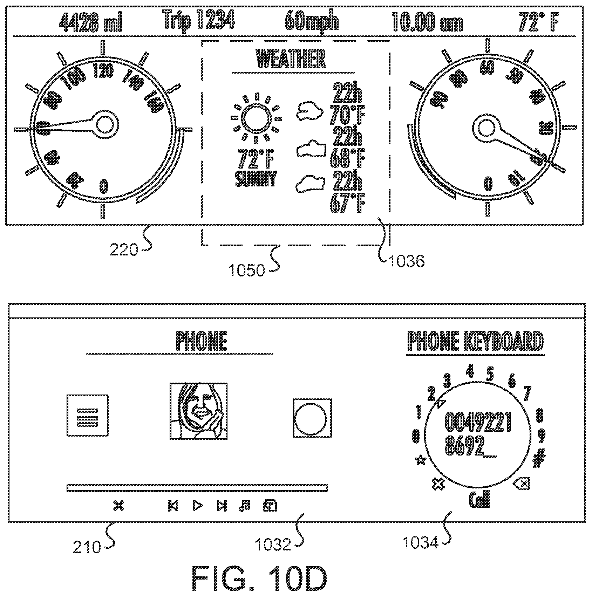

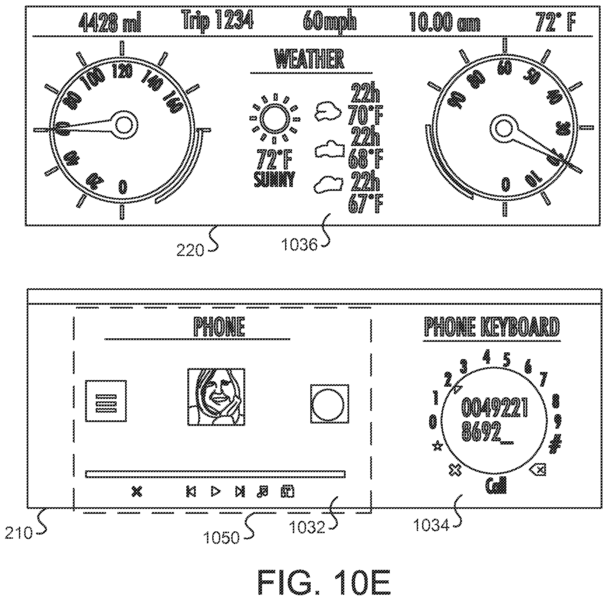

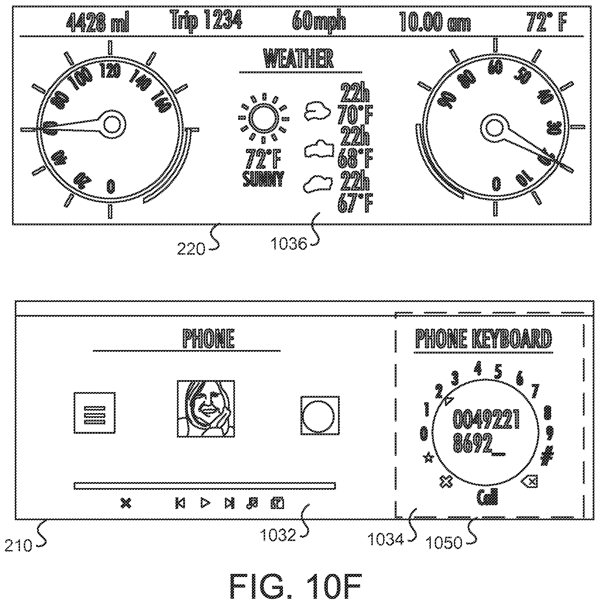

FIG. 10C shows audio-visual system 100 with the focus inactive. In FIG. 10D, the user has activated the focus 1050, which has defaulted to being located on weather application 1036. In FIG. 10E, the user has shifted the focus 1050 in a horizontal direction to the right, where it passed off of the right side of the ICD 220 and onto the left side of the CID 210. As a result, the focus 1050 is on phone application 1032. In FIG. 10F, the user has shifted the focus 1050 in a horizontal direction to the right so that it is located on phone keyboard application 1034, which is the desired application. The shifting of the focus 1050 may be accomplished via a horizontal swipe as illustrated in FIG. 9A and/or other gestures or hard key inputs as previously described.

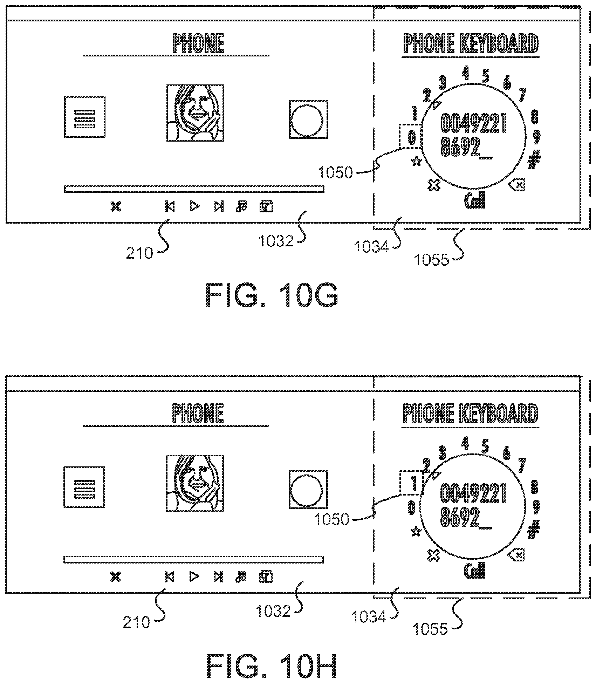

In FIG. 10G, the user has selected phone keyboard application 1034, and the focus 1050 has shifted to an item within the virtual operating field of the phone keyboard application. In this case, the focus 1050 has shifted to the "0" digit of the phone keyboard. As shown, a secondary focus 1055 may be indicated on CID 210 to highlight to the user that the focus is on an item within the phone keyboard application, although the focus is not on the phone keyboard application itself. Secondary focus 1055 may be indicated by any of the techniques previously described with reference to indicating focus. In some embodiments, secondary focus and focus are indicated with different techniques. In other embodiments, secondary focus and focus may be indicated using the same technique.

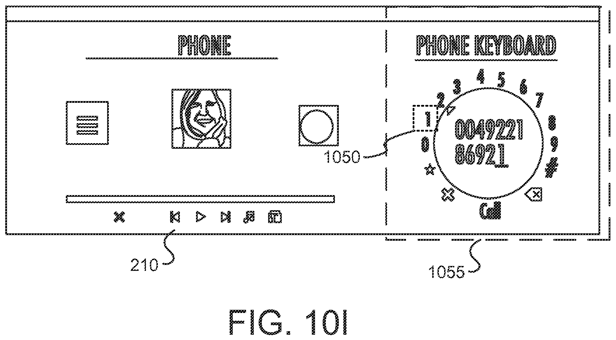

In FIG. 10H, the user has shifted the focus upwards and to the right to the "1" digit item on the phone keyboard. For example, this may be accomplished via a vertical swipe as illustrated in FIG. 9B, a button press on a hard key designated as upward movement, pressing upward on a directional pad, etc. This is the desired item, so the user selects it (e.g., with a tap as shown in FIG. 9D, pressing a hard key button designating as selecting, etc.). In FIG. 10I, the user has selected the "1" digit item, and in response the phone keyboard application has added a "1" digit to the phone number displayed in the center of the virtual display field. At this point, the user has selected the desired item, so the process is complete.

The disclosure in the preceding figures as to user inputs for selecting items in audio-visual system 100 is exemplary, and other embodiments are foreseeable. By example, other user inputs may be used to perform the functions described above, such as pressing the first hardkey to activate the focus, using vertical swipes to navigate between application, using horizontal swipes to navigate between items, etc. By further example, though CID 210 and ICD 220 are displayed above as having the ICD 220 to the left of CID 210, a left horizontal swipe from the leftmost application in ICD 220 may cause the focus to shift to the rightmost application in the CID 210, thus creating a sort of wrap-around effect so that navigation between applications forms a circuit.

Embodiments of the present invention may allow further user inputs based on the input device used. For example, where an application's virtual operating field contains a hierarchy of items, such as a hierarchical menu, the user may move "downwards" (away from the root) in the hierarchy by using a single tap of the first touch sensor, and move "upwards" (towards the root) by pressing the first hardkey. As an additional example, a second hardkey associated with the first touch sensor may immediately shift the focus to a menu providing special options, such as the option to display any one of a preselected set of applications that are considered "favorites."

In some embodiments, performing a rotational swipe on the first touch sensor may cause the focus to shift between applications, but only those applications that are both currently being displayed on the various display apparatuses and considered favorites. Additionally, audio-visual system 100 may be aware of the direction of the rotational swipe, so that a clockwise rotational swipe moves the focus left to right through the favorites applications, and a counter clockwise rotational swipe moves the focus right to left through the favorites applications.

In some embodiments, a third hardkey associated with the second touch sensor may immediately shift the focus to the stereo volume control, so that subsequent horizontal or vertical swipes on the second touch sensor are effective to increase or decrease the stereo volume. Similarly, a fourth hardkey associated with the second touch sensor may immediately shift the focus to the volume control for certain headphone ports, so that subsequent horizontal or vertical swipes on the second touch sensor are effective to increase or decrease the volume of an audio signal delivered to the headphone ports.

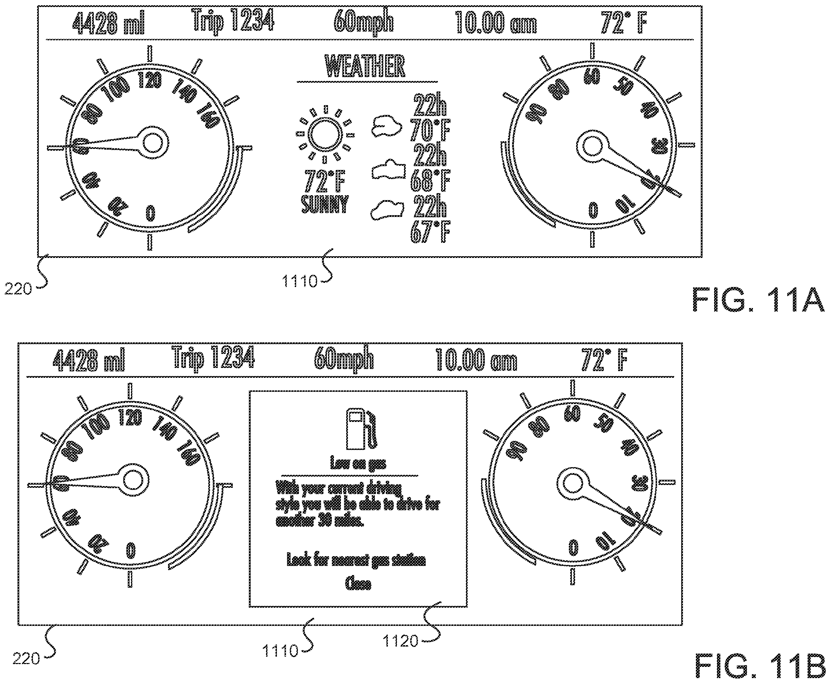

Referring now to FIGS. 11A-11B, presentation of popups and warning notifications are shown, according to some embodiments of the present invention. According to some embodiments of the present invention, audio-visual system 100 may change the applications that are assigned to virtual operating fields in the various display apparatuses without input from a user. As one example, the audio-visual system 100 may display warning messages to notify the user of a particular condition of importance.

FIG. 11A shows an exemplary ICD 220 with a weather application assigned to display information in a centrally placed virtual operating field 1110. A speedometer and tachometer are displaying information in reserved space on the right and left, respectively, of the virtual operating field 1110.

In FIG. 11B, audio-visual system 100 changes the assignment of virtual operating field 1110 to display information for warning popup 1120. As shown, warning popup 1120 informs the user that the automobile is low on fuel. The warning may be any type of general warning providing information to the user about some present condition. The user may choose to close the warning popup 1120 by, for instance, performing a single tap on a first touch sensor. Upon closing the warning popup 1120, virtual operating field 1110 may again display information for the previously displayed weather application.

The disclosure as to warning popups in the preceding figures is exemplary, and other embodiments are foreseeable. By example, popups may be provided for other purposes, such as for low tire pressure, an incoming telephone call, etc. By further example, warning information may be presented in other forms, such as in a status bar similar to status bar 520 discussed previously. Additionally, warning information and popups may be presented in various forms on CID 210 and HUD 230. As discussed previously, a reserved space 601 of HUD 230 may be specifically reserved for presented warning indicators.

In some embodiments, a selection of a warning by a user, or the generation of the warning itself, may cause one or more of the displays to update with further information about the warning. For example, a low fuel level may result in a virtual operating field to be displayed highlighting the fuel level. In such an example, a process such as that shown in FIG. 4G or 5G may be initiates to resize and reposition virtual operating fields in the displays.

In some embodiments, warning information and/or popups may close after a predetermined amount of time. This may be customizable by a user. In still further embodiments, warning information and/or popups may close upon occurrence of an event. For example, a low fuel popup may stay active until additional fuel is detected (e.g., a user fills automobile 1 with additional fuel).

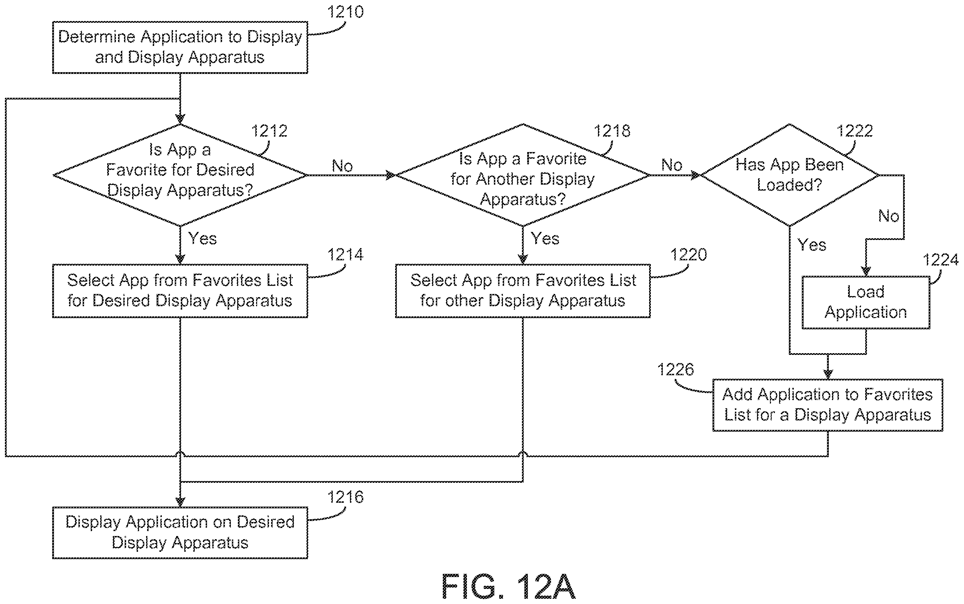

Referring now to FIG. 12A, a process for managing applications and distributing the display of applications across display apparatuses is shown, according to some embodiments of the present invention. The process of FIG. 12A beings at step 1210 where the user determines an application that the user desires to display as well as a particular display apparatus on which the user wishes to display the application. In other embodiments, the user may only provide the application selection and the display system may choose the appropriate display apparatus. At step 1212, the user determines whether the desired application is in the favorites list for the desired display apparatus.

In the case where the desired application is in the favorites list for the desired display apparatus as determined at step 1212, the user at step 1214 selects the desired application from the favorites menu for the desired display apparatus. This may involve the user performing a rotational swipe on a touch sensor associated with the desired display apparatus in order to navigate through the list of favorites and select the desired application. Based on this selection, audio-visual system 100 displays the desired application on the desired display apparatus at step 1216.

In the case where the desired application is not in the favorites list for the desired display apparatus as determined at step 1212, the user at step 1218 determines whether the desired application is in the favorites list for some other display apparatus of audio-visual system 100.

In the case where the desired application is in the favorites list for some other display apparatus as determined at step 1218, the user at step 1220 selects the desired application from the favorites menu for the other display apparatus. This may involve the user performing a rotational swipe on a touch sensor associated with the other display apparatus in order to navigate through the list of favorites and select the desired application. The user may then perform a double tap on the touch sensor associated with the other display apparatus in order to open a sub-menu for the desired application. The user may then navigate down through a list of display apparatuses and select with a single tap the desired display apparatus. Based on this selection, audio-visual system 100 displays the desired application on the desired display apparatus at step 1216.

In the case where the desired application is not in the favorites list for some other display apparatus as determined at step 1218, the user at step 1222 determines whether the desired application has been loaded on audio-visual system 100.

In the case where the desired application has not been loaded on the audio-visual system 100 as determined at step 1222, the user at step 1224 selects the desired application to load onto audio-visual system 100, and audio-visual system 100 loads the desired application. This may involve the user navigating to an applications store through a menu provided on a display apparatus of audio-visual system 100, finding the application, and selecting it to be loaded. This may further involve an agreement to pay a purchase price for the application. This may also involve entry of authentication or authorization credentials associated with the user or an account of the user.

Once the application has been loaded to audio-visual system 100, the user at step 1226 selects the desired application to be added to the favorites list for some display apparatus of audio-visual system 100. At this point, the process can continue essentially in a fashion following the present process from step 1212, wherein the desired application will be displayed on the desired display apparatus in step 1216 either via step 1214 or step 1220.

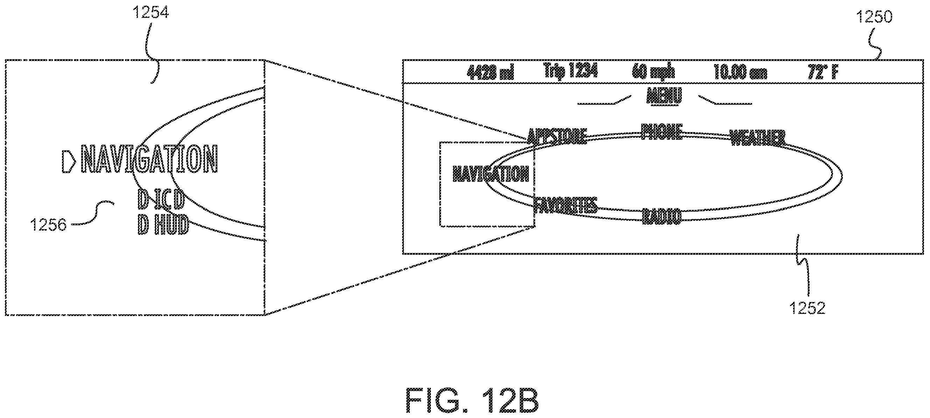

Referring now to FIG. 12B, an exemplary interface for application management is shown, according to some embodiments of the present invention. The interface may be provided on, for example, a CID. As shown, a display field 1250 of a first display apparatus displays a menu 1252. The menu 1252 contains various items, including an application store item and items for each application in the favorites list for the first display apparatus. As shown, the navigation application item from menu 1252 has been selected, which results in the display of a sub-menu 1254 for the navigation application. Sub-menu 1254 contains a list 1256 of other display apparatuses. Using this 1256, a user can select another display apparatus to cause audio-visual system 100 to display the navigation application on the selected other display apparatus (e.g., ICD or HUD).

In some embodiments, a user uses the interface to select an application to be displayed. The user may also select on which display devices to display the application. A user may display an application on one or more of ICD, HUD, CID, passenger displays, connected mobile devices, etc. In further applications, a user may select which virtual operating field in which the application will be displayed and/or the size and properties of the virtual operating field. The options available to a may be restricted. For example, a user may not be able to remove or otherwise change a virtual operating field which displays critical information.

In some embodiments, a user may select the display devices on which the application is to be displayed, and audio-visual system 100 determines the virtual operating field and or the characteristics of the virtual operating field in which the application is displayed. In further embodiments, a user may reposition an application by assigning it to a different virtual operating field. In still further embodiments, a user may move a virtual operating field or otherwise alter a virtual operating field displaying an application. A combination of virtual operating field assignments and alteration of virtual operating fields may be used to customize one or more displays.

In some embodiments, applications may be moved between screens according to user input. For example, on a main screen (e.g., the ICD) thumbnail images may be displayed for all active applications. The thumbnail images may be displayed in a ribbon at the top of the display. Active applications running on the ICD in virtual operating regions may be displayed adjacent (e.g., below) the ribbon. In some embodiments, a user uses the ribbon of active applications in conjunction with inputs to move active applications between display screens (e.g., HUD, ICD, CID, rear passenger display, etc.). For example, a user may focus on an application (e.g., touching the application of a display device, highlighting the application with hard key controls, touching the application image in the thumbnail ribbon, or otherwise giving the application focus as previously described).

The user may then give an input which causes audio-visual system 100 to move the application to a specific display. For example, a user may swipe down on the CID to move an application to the CID. Continuing the example, a user may swipe up after focusing on an application to move the application to the HUD. In further example, a user may swipe to the left after focusing on an application to move the application to the ICD. In further embodiments, alternative inputs may move applications. For example, a user may move applications through menu selections, hard key controls, connected devices, etc.

The disclosure in the preceding figures as to application management in audio-visual system 100 is exemplary, and other embodiments are foreseeable. By example, displaying a desired application on a desired display apparatus may be performed by selecting the application from a master list of loaded applications, regardless of whether the application is associated with a favorites list for some display apparatus.

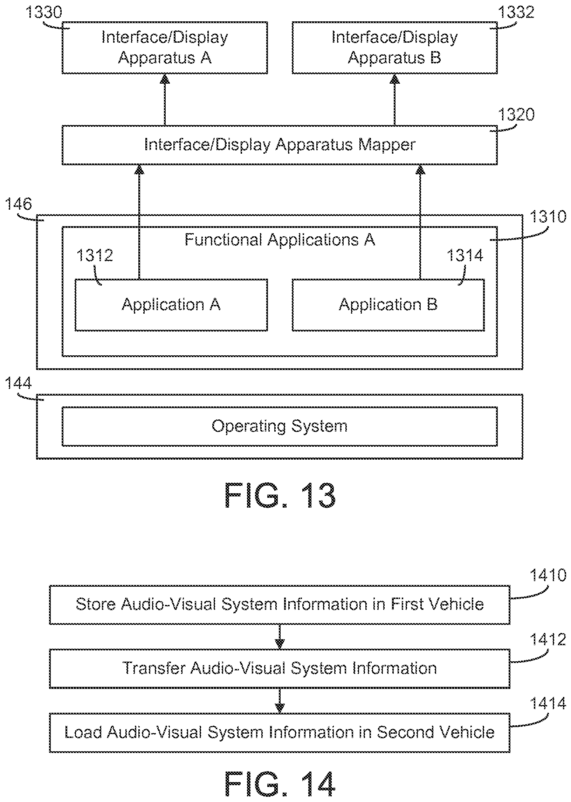

Referring now to FIG. 13, an exemplary configuration of an audio-visual system for allowing provision of applications to input/output devices is shown, according to some embodiments of the present invention. FIG. 13 shows some features previously introduced in FIG. 1C. As in FIG. 1C, there is an operating system layer 144 and a functional layer 146. Other features may be similar to those of FIG. 1C but are not shown.

In FIG. 13, functional layer 146 contains functional applications A 1310, which in turn contains Application A 1312 and Application B 1314. Application A 1312 and Application B 1314 may be separate applications, or they may be different instances of the same application running in parallel. An interface/display apparatus mapper 1320 is further provided. Interface/display apparatus A 1330 and interface/display apparatus B 1332 are further provided.

In the exemplary audio-visual system 100 of FIG. 13, the interface/display apparatus mapper 1320 is provided to map input and output signals from applications to input/output devices. As shown, interface/display apparatus mapper 1320 maps Application A 1312 to interface/display apparatus A 1330. Interface/display apparatus mapper 1320 maps Application B 1314 to interface/display apparatus 1332. In this way, interface/display apparatus mapper 1320 allows different input/output devices to display and receive input for different applications, independent of what the other input/output devices are doing.

In some embodiments, interface/display apparatus mapper 1320 may manages input and output between elements of audio-visual system 100. For example, interface/display apparatus mapper 1320 may determine which application receives the input when an input is registered on a display device or through a hard key control. Interface/display apparatus mapper 1320 may determine which virtual operating field has received an input and send that input to the corresponding application. Similarly, interface/display apparatus mapper 1320 may control or otherwise cause a display device to display application output in a virtual operating field corresponding to that application.

In some embodiments, interface/display apparatus mapper 1320 maps an Internet radio streaming application to a CID 210 provided in the front of automobile 1, thereby causing the audio stream data to be played over the stereo of automobile 1. At the same time, interface/display apparatus mapper 1320 may map an Internet video streaming application to a touchscreen display and associated audio output port device provided to a passenger in a rear seat of automobile 1, thereby allowing the passenger in the rear seat to view the Internet video stream on the provided device. In this way, audio-visual system 100 may allow different passengers of automobile 1 to interact with different applications independently.

In some embodiments, interface/display apparatus mapper 1320 maps one instance of an Internet radio streaming application to an output audio port provided to a first passenger, while mapping a second instance of the same Internet radio streaming application to an output audio port provided to a second passenger. In this way, audio-visual system 100 may allow different passengers of automobile 1 to interact independently with different instances of the same application running in parallel.

In some embodiments, interface/display apparatus mapper 1320 maps the input to a navigation application to a hand held device 350, while mapping the output of the navigation application to an HUD 230. In this way, audio-visual system 100 may allow an application to be controlled from a different input source than the source to which the output is provided. This may be advantageous in a navigation application setting, where the driver of automobile 1 is the primary observer of the output from the navigation application, and as such, the HUD 230 may be the best output apparatus for the navigation application. However, the driver of automobile 1 may not want to input information into the navigation application, such as a destination address, so as not to be distracted while driving. In this situation, the best passenger for providing input to the navigation application may be a passenger in the front, non-driver seat or a passenger in a rear seat. In either case, the passenger may use a device such as hand-held device 350 communicating over a wireless connection to audio-visual system 100 in order to provide input information to the navigation application.

Referring now to FIG. 14, a process for sharing audio-visual system information between multiple vehicles is shown, according to some embodiments of the present invention. In some situations it may be advantageous to allow a user of audio-visual system 100 in a first vehicle to transfer the configuration and preferences of audio-visual system 100 to a second vehicle.

The process to do so begins at step 1410, where relevant information such as configuration information, preferences information, and display layout information is stored at audio-visual system 100 in the first vehicle. At step 1412, the stored information may then be transferred to an intermediate location, such as a server or other network based device. At step 1414, the stored information may then be loaded onto audio-visual system 100 in the second vehicle. This transfers may be performed through physical transfer media such as storage disks, or through wireless communications.

This process may be advantageous where the first vehicle is the primary vehicle of a user, while the second vehicle is a rental vehicle of the user. This process would thereby allow the user to continue using audio-visual system 100 in the accustomed fashion while in the second vehicle without any reconfiguration in the second vehicle. This process may be advantageous in other scenarios where the first vehicle is the primary vehicle of a user, while the second vehicle is a newly purchased vehicle of the user. This process would thereby allow the user to continue use of audio-visual system 100 in the accustomed fashion in the new vehicle without any reconfiguration in the new vehicle.

This process may be advantageous in other scenarios where the first vehicle is a master vehicle, potentially a virtual vehicle, for a rental car company, and the second vehicle is any vehicle that is rented to customers of the rental car company. This process would thereby allow the rental car company to reset the rented vehicle the a default setup, or one of multiple default setups, after rental by a customer so as to ensure a standard setup of audio-visual system 100 for the next customer to rent the vehicle.

In some embodiments, layout information is stored within memory located within an automobile key, fob, or other like device. An automobile 1 may be configured to retrieve the layout information when the key or fob is inserted into a corresponding receptacle in the automobile 1. For example, the key or fob may transfer the layout information through a wired contact such as a USB or like connection. In other embodiments, an automobile 1 may retrieve the information stored on the key or fob using a wireless protocol. In further embodiments, a key or fob may have an identification code stored. This identification code may be retrieved by an automobile 1 wirelessly or through a wired connection (e.g., by radio frequency identification, Bluetooth, USB connection, etc.). Audio-visual system 100 may retrieve layout information corresponding to the identification code of the key or fob from a remote storage location (e.g., a server) and apply the layout information to the automobile 1.

The construction and arrangement of the systems and methods as shown in the various exemplary embodiments are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.). For example, the position of elements may be reversed or otherwise varied and the nature or number of discrete elements or positions may be altered or varied. Accordingly, all such modifications are intended to be included within the scope of the present disclosure. The order or sequence of any process or method steps may be varied or re-sequenced according to alternative embodiments. Other substitutions, modifications, changes, and omissions may be made in the design, operating conditions and arrangement of the exemplary embodiments without departing from the scope of the present disclosure.

The present disclosure contemplates methods, systems and program products on any machine-readable media for accomplishing various operations. The embodiments of the present disclosure may be implemented using existing computer processors, or by a special purpose computer processor for an appropriate system, incorporated for this or another purpose, or by a hardwired system. Embodiments within the scope of the present disclosure include program products comprising machine-readable media for carrying or having machine-executable instructions or data structures stored thereon. Such machine-readable media can be any available media that can be accessed by a general purpose or special purpose computer or other machine with a processor. By way of example, such machine-readable media can comprise RAM, ROM, EPROM, EEPROM, CD-ROM or other optical disk storage, magnetic disk storage or other magnetic storage devices, or any other medium which can be used to carry or store desired program code in the form of machine-executable instructions or data structures and which can be accessed by a general purpose or special purpose computer or other machine with a processor. When information is transferred or provided over a network or another communications connection (either hardwired, wireless, or a combination of hardwired or wireless) to a machine, the machine properly views the connection as a machine-readable medium. Thus, any such connection is properly termed a machine-readable medium. Combinations of the above are also included within the scope of machine-readable media. Machine-executable instructions include, for example, instructions and data which cause a general purpose computer, special purpose computer, or special purpose processing machines to perform a certain function or group of functions.

Although the figures show a specific order of method steps, the order of the steps may differ from what is depicted. Also two or more steps may be performed concurrently or with partial concurrence. Such variation will depend on the software and hardware systems chosen and on designer choice. All such variations are within the scope of the disclosure. Likewise, software implementations could be accomplished with standard programming techniques with rule based logic and other logic to accomplish the various connection steps, processing steps, comparison steps and decision steps.

## Claims

1. A vehicle interface system (301) comprising:
at least one electronic display configured to present information to an occupant of the vehicle;
a processing circuit comprising:
a hardware layer (140) comprising a first processor and a second processor; and
memory storing (i) a hardware virtualization layer (142) comprising software for accessing the hardware layer (140); and (ii) a functional layer (146) comprising a plurality of software applications configured to provide display data for presentation via the electronic display, wherein the hardware virtualization layer (142) runs a first software application of the functional layer (146) on the first processor and a second software application of the functional layer on the second processor such that the hardware layer (140) runs the first software application and the second software application compartmentalized on single processors of the hardware layer (140);
the memory further storing a display mapper configured to generate a plurality of adjustable virtual operating fields (410, 411, 412, 510, 511, 512) and to assign each of the virtual operating fields (410, 411, 412, 510, 511, 512) to one of the software applications, wherein assigning the virtual operating fields (410, 411, 412, 510, 511, 512) includes assigning the first software application to a first virtual operating field and assigning the second software application to a second virtual operating field;
wherein each of the virtual operating fields (410, 411, 412, 510, 511, 512) covers a non-overlapping portion of the electronic display and presents the display data provided by the software application to which the virtual operating field is assigned;
wherein the display mapper is configured to reassign a virtual operating field from one of the software applications to another software application in response to a determination that a number of virtual operating fields in the plurality of virtual operating fields (410, 411, 412, 510, 511, 512) is equal to or greater than a predetermined maximum number of virtual operating fields and that no virtual operating field of the plurality of virtual operating fields (410, 411, 412, 510, 511, 512) is assigned to display information for the another software application;
wherein the electronic display comprises at least one reserved portion not covered by any virtual operating field of the plurality of virtual operating fields (410, 411, 412, 510, 511, 512), and the at least one reserved portion displays road speed information and engine speed information for the vehicle.

2. The vehicle interface system (301) of Claim 1,
wherein the processing circuit is configured to add a third virtual operating field to the plurality of virtual operating fields (410, 411, 412, 510, 511, 512) in order to display information for a third software application to which the third virtual operating field is assigned.

3. The vehicle interface (301) system of Claim 2,
wherein adding the third virtual operating field comprises at least one of repositioning and resizing an existing virtual operating field that is already in the plurality of operating fields (410, 411, 412, 510, 511, 512) with respect to the portion of the electronic display that the existing virtual operating field covers.

4. The vehicle interface system (301) of Claim 2,
wherein the processing circuit is configured to add the third virtual operating field to the plurality of virtual operating fields (410, 411, 412, 510, 511, 512) only if a number of virtual operating fields in the plurality of virtual operating fields (410, 411, 412, 510, 511, 512) is less than a predetermined maximum number of virtual operating fields before adding the third virtual operating field.

5. The vehicle interface system (301) of Claim 1, further comprising a touch sensor (320) configured to receive an input from the vehicle occupant;
wherein the processing circuit is configured to navigate between virtual operating fields of the plurality of virtual operating fields (410, 411, 412, 510, 511, 512) using the touch sensor (320).

6. The vehicle interface system (301) of Claim 1,
wherein the processing circuit is configured to present, via the electronic display, an application management menu for managing availability and display of the plurality of software applications.

7. The vehicle interface system (301) of Claim 1,
wherein at least one software application of the plurality of software applications is a navigation application and a vehicle occupant interacts with the navigation application using a wireless hand held device.

8. The vehicle interface system (301) of Claim 1,
wherein the display mapper is configured to assign the first virtual operating field to the first software application and to display the first virtual operating field via a first electronic display apparatus;
wherein the display mapper is configured to assign the second virtual operating field to the second software application and to display the second virtual operating field via a second electronic display apparatus;
wherein the first virtual operating field and the second virtual operating field are functionally independent, allowing a first vehicle occupant to interact with the first software application via the first virtual operating field independently of a second occupant interacting with the second software application via the second virtual operating field.

9. The vehicle interface system (301) of Claim 1,
wherein the at least one electronic display comprises a head-up display (230), an instrument cluster display (220), and at least one other video display;
wherein at least one of the plurality of virtual operating fields (410, 411, 412, 510, 511, 512) is presented via each of the head-up display (230), the instrument cluster display (220), and the at least one other video display.

10. A method for processing and presenting information in a vehicle, the method comprising:
displaying information to a vehicle occupant via at least one electronic display;
partitioning a display field of the at least one electronic display into a plurality of virtual operating fields (410, 411, 412, 510, 511, 512), each of the plurality of virtual operating fields (410, 411, 412, 510, 511, 512) covering a non-overlapping portion of the display field;
running a plurality of software applications configured to provide display data for presentation via the electronic display on a hardware layer (140) of a processing circuit, the hardware layer (140) comprising a plurality of processing cores such that a first software application runs on a first processing core and a second software application runs on a second processing core, wherein a hardware virtualization layer (142) of a memory of the processing circuit includes software for accessing the hardware layer (140), and a functional layer (146) of the memory includes the plurality of software applications, wherein the hardware layer (140) runs the first software application and the second software application compartmentalized on single processors of the hardware layer (140);
assigning each of the virtual operating fields (410, 411, 412, 510, 511, 512) to one of the plurality of software applications, wherein assigning the virtual operating fields (410, 411, 412, 510, 511, 512) includes assigning the first software application to a first virtual operating field and assigning the second software application to a second virtual operating field; and
presenting, via the plurality of virtual operating fields (410, 411, 412, 510, 511, 512), display data provided by the plurality of software applications, wherein each of the virtual operating fields (410, 411, 412, 510, 511, 512) presents display data provided by the software application to which the virtual operating field is assigned;
reassigning, by a display mapper, a virtual operating field from one of the software applications to another software application in response to a determination that a number of virtual operating fields in the plurality of virtual operating fields (410, 411, 412, 510, 511, 512) is equal to or greater than a predetermined maximum number of virtual operating fields and that no virtual operating field of the plurality of virtual operating fields (410, 411, 412, 510, 511, 512) is assigned to display information for the another software application; wherein the electronic display comprises at least one reserved portion not covered by any virtual operating field of the plurality of virtual operating fields (410, 411, 412, 510, 511, 512);
the method further comprising displaying at least one of road speed information and engine speed information for the vehicle via the reserved portion.

11. The method of Claim 10, further comprising adding a third virtual operating field to the plurality of virtual operating fields (410, 411, 412, 510, 511, 512) in order to display information for a third software application to which the third virtual operating field is assigned.

12. A non-transitory computer-readable storage medium comprising computer program code for processing and presenting information in a vehicle, the computer program code comprising instructions which, when executed by a processor, cause said processor to:
display information to a vehicle occupant via at least one electronic display;
partition a display field of the at least one electronic display into a plurality of virtual operating fields (410, 411, 412, 510, 511, 512), each of the plurality of virtual operating fields (410, 411, 412, 510, 511, 512) covering a non-overlapping portion of the display field;
run a plurality of software applications configured to provide display data for presentation via the electronic display on a hardware layer (140) of a processing circuit, the hardware layer (140) comprising a plurality of processing cores such that a first software application runs on a first processing core and a second software application runs on a second processing core, wherein a hardware virtualization layer (142) of a memory of the processing circuit includes software for accessing the hardware layer (140), and a functional layer (146) of the memory includes the plurality of software applications, wherein the hardware layer (140) runs the first software application and the second software application compartmentalized on single processors of the hardware layer (140);
assign each of the virtual operating fields (410, 411, 412, 510, 511, 512) to one of the plurality of software applications, wherein assigning the virtual operating fields (410, 411, 412, 510, 511, 512) includes assigning the first software application to a first virtual operating field and assigning the second software application to a second virtual operating field; and
present, via the plurality of virtual operating fields (410, 411, 412, 510, 511, 512), display data provided by the plurality of software applications, wherein each of the virtual operating fields (410, 411, 412, 510, 511, 512) presents display data provided by the software application to which the virtual operating field is assigned;
configure a display mapper to reassign a virtual operating field from one of the software applications to another software application in response to a determination that a number of virtual operating fields in the plurality of virtual operating fields (410, 411, 412, 510, 511, 512) is equal to or greater than a predetermined maximum number of virtual operating fields and that no virtual operating field of the plurality of virtual operating fields (410, 411, 412, 510, 511, 512) is assigned to display information for the another software application; wherein the electronic display comprises at least one reserved portion not covered by any virtual operating field of the plurality of virtual operating fields (410, 411, 412, 510, 511, 512), and the at least one reserved portion displays road speed information and engine speed information for the vehicle.

## Patentansprüche

1. Fahrzeugschnittstellensystem (301), Folgendes umfassend:
mindestens eine elektronische Anzeige, die konfiguriert ist, um für einen Insassen des Fahrzeugs Informationen darzustellen;
eine Verarbeitungsschaltung, Folgendes umfassend:
eine Hardwareebene (140), die einen ersten Prozessor und einen zweiten Prozessor umfasst; und Speicher zum Speichern (i) einer Hardware-Virtualisierungsebene (142), die Software zum Zugreifen auf die Hardwareebene (140) umfasst; und (ii) einer funktionalen Ebene (146), die eine Vielzahl von Softwareanwendungen umfasst, die konfiguriert sind, um Anzeigedaten zur Darstellung über die elektronische Anzeige bereitzustellen, wobei die Hardware-Virtualisierungsebene (142) eine erste Softwareanwendung der funktionalen Ebene (146) auf dem ersten Prozessor und eine zweite Softwareanwendung der funktionalen Ebene auf dem zweiten Prozessor ausführt, so dass die Hardwareebene (140) die erste Softwareanwendung und die zweite Softwareanwendung, die auf einzelne Prozessoren der Hardwareebene (140) aufgeteilt sind, ausführt;
wobei der Speicher ferner eine Anzeigezuordnungseinrichtung speichert, die konfiguriert ist, um eine Vielzahl einstellbarer virtueller Bedienfelder (410, 411, 412, 510, 511, 512) zu erzeugen und um jedes der virtuellen Bedienfelder (410, 411, 412, 510, 511, 512) einer der Softwareanwendungen zuzuweisen, wobei das Zuweisen der virtuellen Bedienfelder (410, 411, 412, 510, 511, 512) das Zuweisen der ersten Softwareanwendung zu einem ersten virtuellen Bedienfeld und das Zuweisen der zweiten Softwareanwendung zu einem zweiten virtuellen Bedienfeld beinhaltet;
wobei jedes der virtuellen Bedienfelder (410, 411, 412, 510, 511, 512) einen nicht überlappenden Abschnitt der elektronischen Anzeige abdeckt und die von der Softwareanwendung, der das virtuelle Bedienfeld zugewiesen ist, bereitgestellten Anzeigedaten darstellt;
wobei die Anzeigezuordnungseinrichtung konfiguriert ist, um als Reaktion auf ein Feststellen, dass eine Anzahl von virtuellen Bedienfeldern in der Vielzahl von virtuellen Bedienfeldern (410, 411, 412, 510, 511, 512) gleich wie oder größer als eine vorbestimmte maximale Anzahl von virtuellen Bedienfeldern ist und dass kein virtuelles Bedienfeld aus der Vielzahl von virtuellen Bedienfeldern (410, 411, 412, 510, 511, 512) dem Anzeigen von Informationen für die andere Softwareanwendung zugewiesen ist, ein virtuelles Bedienfeld von einer der Softwareanwendungen einer anderen Softwareanwendung neu zuzuweisen;
wobei die elektronische Anzeige mindestens einen reservierten Abschnitt umfasst, der nicht durch ein virtuelles Bedienfeld der Vielzahl von virtuellen Bedienfeldern (410, 411, 412, 510, 511, 512) abgedeckt ist, und der mindestens eine reservierte Abschnitt Straßengeschwindigkeitsinformationen und Motordrehzahlinformationen für das Fahrzeug anzeigt.

2. Fahrzeugschnittstellensystem (301) nach Anspruch 1, wobei die Verarbeitungsschaltung konfiguriert ist, um ein drittes virtuelles Bedienfeld zu der Vielzahl von virtuellen Bedienfeldern (410, 411, 412, 510, 511, 512) hinzuzufügen, um Informationen für eine dritte Softwareanwendung anzuzeigen, der das dritte virtuelle Bedienfeld zugewiesen ist.

3. Fahrzeugschnittstellensystem (301) nach Anspruch 2, wobei das Hinzufügen des dritten virtuellen Bedienfelds wenigstens eines aus Neupositionieren und Ändern der Größe eines vorhandenen virtuellen Bedienfelds, das sich bereits in der Vielzahl von Bedienfeldern (410, 411, 412, 510, 511, 512) befindet, in Bezug auf den Abschnitt der elektronischen Anzeige, den das vorhandene virtuelle Bedienfeld abdeckt, umfasst.

4. Fahrzeugschnittstellensystem (301) nach Anspruch 2, wobei die Verarbeitungsschaltung so konfiguriert ist, dass sie das dritte virtuelle Bedienfeld zu der Vielzahl von virtuellen Bedienfeldern (410, 411, 412, 510, 511, 512) nur dann hinzufügt, wenn eine Anzahl von virtuellen Bedienfeldern in der Vielzahl von virtuellen Bedienfeldern (410, 411, 412, 510, 511, 512) kleiner als eine vorbestimmte maximale Anzahl von virtuellen Bedienfeldern ist, bevor das dritte virtuelle Bedienfeld hinzugefügt ist.

5. Fahrzeugschnittstellensystem (301) nach Anspruch 1, ferner umfassend einen Berührungssensor (320), der konfiguriert ist, um eine Eingabe vom Fahrzeuginsassen zu empfangen;
wobei die Verarbeitungsschaltung konfiguriert ist, um unter Verwendung des Berührungssensors (320) zwischen virtuellen Bedienfeldern der Vielzahl von virtuellen Bedienfeldern (410, 411, 412, 510, 511, 512) zu navigieren.

6. Fahrzeugschnittstellensystem (301) nach Anspruch 1, wobei die Verarbeitungsschaltung konfiguriert ist, um über die elektronische Anzeige ein Anwendungsverwaltungsmenü zum Verwalten der Verfügbarkeit und Anzeige der Vielzahl von Softwareanwendungen darzustellen.

7. Fahrzeugschnittstellensystem (301) nach Anspruch 1, wobei mindestens eine Softwareanwendung der Vielzahl von Softwareanwendungen eine Navigationsanwendung ist und ein Fahrzeuginsasse unter Verwendung eines drahtlosen Handgeräts mit der Navigationsanwendung interagiert.

8. Fahrzeugschnittstellensystem (301) nach Anspruch 1, wobei die Anzeigezuordnungseinrichtung konfiguriert ist, um das erste virtuelle Bedienfeld der ersten Softwareanwendung zuzuweisen und das erste virtuelle Bedienfeld über eine erste elektronische Anzeigevorrichtung anzuzeigen;
wobei die Anzeigezuordnungseinrichtung konfiguriert ist, um das zweite virtuelle Bedienfeld der zweiten Softwareanwendung zuzuweisen und das zweite virtuelle Bedienfeld über eine zweite elektronische Anzeigevorrichtung anzuzeigen;
wobei das erste virtuelle Bedienfeld und das zweite virtuelle Bedienfeld funktional unabhängig sind, was es einem ersten Fahrzeuginsassen erlaubt, über das erste virtuelle Bedienfeld unabhängig von einem zweiten Insassen, der mit der zweiten Softwareanwendung über das zweite virtuelle Bedienfeld interagiert, mit der ersten Softwareanwendung zu interagieren.

9. Fahrzeugschnittstellensystem (301) nach Anspruch 1, wobei die mindestens eine elektronische Anzeige eine Head-Up-Anzeige (230), eine Kombinationsinstrument-Anzeige (220) und mindestens eine andere Videoanzeige umfasst;
wobei mindestens eines der Vielzahl von virtuellen Bedienfeldern (410, 411, 412, 510, 511, 512) über jede der Head-Up-Anzeige (230), der Kombinationsinstrument-Anzeige (220) und der mindestens einen anderen Videoanzeige dargestellt ist.

10. Verfahren zum Verarbeiten und Darstellen von Informationen in einem Fahrzeug, wobei das Verfahren Folgendes umfasst:
Anzeigen von Informationen für einen Fahrzeuginsassen über mindestens eine elektronische Anzeige;
Aufteilen eines Anzeigefeldes der mindestens einen elektronischen Anzeige in eine Vielzahl von virtuellen Bedienfeldern (410, 411, 412, 510, 511, 512), wobei jedes der Vielzahl von virtuellen Bedienfeldern (410, 411, 412, 510, 511, 512) einen nicht überlappenden Abschnitt des Anzeigefeldes abdeckt;
Ausführen einer Vielzahl von Softwareanwendungen, die so konfiguriert sind, dass sie Anzeigedaten zur Darstellung über die elektronische Anzeige auf einer Hardwareebene (140) einer Verarbeitungsschaltung bereitstellen, wobei die Hardwareebene (140) eine Vielzahl von Verarbeitungskernen umfasst, so dass eine erste Softwareanwendung auf einem ersten Verarbeitungskern ausgeführt wird und eine zweite Softwareanwendung auf einem zweiten Verarbeitungskern ausgeführt wird, wobei eine Hardware-Virtualisierungsebene (142) eines Speichers der Verarbeitungsschaltung Software zum Zugriff auf die Hardwareebene (140) beinhaltet und eine funktionale Ebene (146) des Speichers die Vielzahl von Softwareanwendungen beinhaltet, wobei die Hardwareebene (140) die erste Softwareanwendung und die zweite Softwareanwendung, die auf einzelne Prozessoren der Hardwareebene (140) aufgeteilt sind, ausführt;
Zuweisen jedes der virtuellen Bedienfelder (410, 411, 412, 510, 511, 512) zu einer der Vielzahl von Softwareanwendungen, wobei das Zuweisen der virtuellen Bedienfelder (410, 411, 412, 510, 511, 512) das Zuweisen der ersten Softwareanwendung zu einem ersten virtuellen Bedienfeld und das Zuweisen der zweiten Softwareanwendung zu einem zweiten virtuellen Bedienfeld beinhaltet; und
Darstellen von Anzeigedaten, die von der Vielzahl von Softwareanwendungen bereitgestellt werden, über die Vielzahl von virtuellen Bedienfeldern (410, 411, 412, 510, 511, 512), wobei jedes der virtuellen Bedienfelder (410, 411, 412, 510, 511, 512) Anzeigedaten darstellt, die von der Softwareanwendung bereitgestellt werden, der das virtuelle Bedienfeld zugewiesen ist;
Neuzuweisen, über eine Anzeigezuordnungseinrichtung, eines virtuellen Bedienfeldes von einer der Softwareanwendungen zu einer anderen Softwareanwendung als Reaktion auf ein Feststellen, dass eine Anzahl von virtuellen Bedienfeldern in der Vielzahl von virtuellen Bedienfeldern (410, 411, 412, 510, 511, 512) gleich wie oder größer als eine vorbestimmte maximale Anzahl von virtuellen Bedienfeldern ist und dass kein virtuelles Bedienfeld der Vielzahl von virtuellen Bedienfeldern (410, 411, 412, 510, 511, 512) dem Anzeigen von Informationen für die andere Softwareanwendung zugewiesen ist;
wobei die elektronische Anzeige mindestens einen reservierten Abschnitt umfasst, der nicht von einem virtuellen Bedienfeld der Vielzahl von virtuellen Bedienfeldern (410, 411, 412, 510, 511, 512) abgedeckt ist;
wobei das Verfahren ferner das Anzeigen von mindestens einem aus Straßengeschwindigkeitsinformationen und Motordrehzahlinformationen für das Fahrzeug über den reservierten Abschnitt umfasst.

11. Verfahren nach Anspruch 10, ferner umfassend das Hinzufügen eines dritten virtuellen Bedienfeldes zu der Vielzahl von virtuellen Bedienfeldern (410, 411, 412, 510, 511, 512), um Informationen für eine dritte Softwareanwendung anzuzeigen, der das dritte virtuelle Bedienfeld zugewiesen ist.

12. Nicht vorübergehendes computerlesbares Speichermedium, umfassend Computerprogrammcode zum Verarbeiten und Darstellen von Informationen in einem Fahrzeug, wobei der Computerprogrammcode Anweisungen umfasst, die, wenn sie von einem Prozessor ausgeführt werden, den Prozessor veranlassen zum:
Anzeigen von Informationen für einen Fahrzeuginsassen über mindestens eine elektronische Anzeige;
Aufteilen eines Anzeigefeldes der mindestens einen elektronischen Anzeige in eine Vielzahl von virtuellen Bedienfeldern (410, 411, 412, 510, 511, 512), wobei jedes der Vielzahl von virtuellen Bedienfeldern (410, 411, 412, 510, 511, 512) einen nicht überlappenden Abschnitt des Anzeigefelds abdeckt;
Ausführen einer Vielzahl von Softwareanwendungen, die konfiguriert sind, um Anzeigedaten zur Darstellung über die elektronische Anzeige auf einer Hardwareebene (140) einer Verarbeitungsschaltung bereitzustellen, wobei die Hardwareebene (140) eine Vielzahl von Verarbeitungskernen umfasst, so dass eine erste Softwareanwendung auf einem ersten Verarbeitungskern ausgeführt wird und eine zweite Softwareanwendung auf einem zweiten Verarbeitungskern ausgeführt wird, wobei eine Hardware-Virtualisierungsebene (142) eines Speichers der Verarbeitungsschaltung Software zum Zugriff auf die Hardwareebene (140) beinhaltet und eine funktionale Ebene (146) des Speichers die Vielzahl von Softwareanwendungen beinhaltet, wobei die Hardwareebene (140) die erste Softwareanwendung und die zweite Softwareanwendung, die auf einzelne Prozessoren der Hardwareebene (140) aufgeteilt sind, ausführt;
Zuweisen jedes der virtuellen Bedienfelder (410, 411, 412, 510, 511, 512) zu einer der Vielzahl von Softwareanwendungen, wobei das Zuweisen der virtuellen Bedienfelder (410, 411, 412, 510, 511, 512) das Zuweisen der ersten Softwareanwendung zu einem ersten virtuellen Bedienfeld und das Zuweisen der zweiten Softwareanwendung zu einem zweiten virtuellen Bedienfeld beinhaltet; und
Darstellen, über die Vielzahl von virtuellen Bedienfeldern (410, 411, 412, 510, 511, 512), von Anzeigedaten, die von der Vielzahl von Softwareanwendungen bereitgestellt werden, wobei jedes der virtuellen Bedienfelder (410, 411, 412, 510, 511, 512) Anzeigedaten darstellt, die von der Softwareanwendung bereitgestellt werden, der das virtuelle Bedienfeld zugewiesen ist;
Konfigurieren einer Anzeigezuordnungseinrichtung, um, als Reaktion auf ein Feststellen, dass eine Anzahl von virtuellen Bedienfeldern in der Vielzahl von virtuellen Bedienfeldern (410, 411, 412, 510, 511, 512) gleich wie oder größer als eine vorbestimmte maximale Anzahl von virtuellen Bedienfeldern ist und dass kein virtuelles Bedienfeld der Vielzahl von virtuellen Bedienfeldern (410, 411, 412, 510, 511, 512) dem Anzeigen von Informationen für die andere Softwareanwendung zugewiesen ist, ein virtuelles Bedienfeld von einer der Softwareanwendungen einer anderen Softwareanwendung neu zuzuweisen; wobei die elektronische Anzeige mindestens einen reservierten Abschnitt umfasst, der nicht durch ein virtuelles Bedienfeld der Vielzahl von virtuellen Bedienfeldern (410, 411, 412, 510, 511, 512) abgedeckt ist, und der mindestens eine reservierte Abschnitt Straßengeschwindigkeitsinformationen und Motordrehzahlinformationen für das Fahrzeug anzeigt.

## Revendications

1. Système d'interface de véhicule (301) comprenant :
au moins un affichage électronique configuré pour présenter des informations à un occupant du véhicule ;
un circuit de traitement comprenant :
une couche matérielle (140) comprenant un premier processeur et un second processeur ; et une mémoire stockant (i) une couche de virtualisation matérielle (142) comprenant un logiciel permettant d'accéder à la couche matérielle (140) ;
et (ii) une couche fonctionnelle (146) comprenant une pluralité d'applications logicielles configurées pour fournir des données d'affichage pour une présentation via l'affichage électronique, dans lequel la couche de virtualisation matérielle (142) exécute une première application logicielle de la couche fonctionnelle (146) sur le premier processeur et une deuxième application logicielle de la couche fonctionnelle sur le second processeur de sorte que la couche matérielle (140) exécute la première application logicielle et la deuxième application logicielle compartimentées sur des processeurs uniques de la couche matérielle (140) ;
la mémoire stockant en outre un mappeur d'affichage configuré pour générer une pluralité de champs d'exploitation virtuels ajustables (410, 411, 412, 510, 511, 512) et pour affecter chacun des champs d'exploitation virtuels (410, 411, 412, 510, 511, 512) à l'une des applications logicielles, dans lequel l'affectation des champs d'exploitation virtuels (410, 411, 412, 510, 511, 512) comprend l'affectation de la première application logicielle à un premier champ d'exploitation virtuel et l'affectation de la deuxième application logicielle à un deuxième champ d'exploitation virtuel ;
dans lequel chacun des champs d'exploitation virtuels (410, 411, 412, 510, 511, 512) couvre une partie non chevauchante de l'affichage électronique et présente les données d'affichage fournies par l'application logicielle à laquelle le champ d'exploitation virtuel est affecté ;
dans lequel le mappeur d'affichage est configuré pour réaffecter un champ d'exploitation virtuel de l'une des applications logicielles à une autre application logicielle en réponse à la détermination qu'un nombre de champs d'exploitation virtuels dans la pluralité de champs d'exploitation virtuels (410, 411, 412, 510, 511, 512) est égal ou supérieur à un nombre maximal prédéterminé de champs d'exploitation virtuels et qu'aucun champ d'exploitation virtuel de la pluralité de champs d'exploitation virtuels (410, 411, 412, 510, 511, 512) n'est affecté à l'affichage d'informations pour l'autre application logicielle ;
dans lequel l'affichage électronique comprend au moins une partie réservée non couverte par un champ d'exploitation virtuel parmi la pluralité de champs d'exploitation virtuels (410, 411, 412, 510, 511, 512), et l'au moins une partie réservée affiche des informations de vitesse sur route et des informations de vitesse de moteur pour le véhicule.

2. Système d'interface de véhicule (301) selon la revendication 1, dans lequel le circuit de traitement est configuré pour ajouter un troisième champ d'exploitation virtuel à la pluralité de champs d'exploitation virtuels (410, 411, 412, 510, 511, 512) afin d'afficher des informations pour une troisième application logicielle à laquelle le troisième champ d'exploitation virtuel est affecté.

3. Système d'interface de véhicule (301) selon la revendication 2, dans lequel l'ajout du troisième champ d'exploitation virtuel comprend au moins l'un parmi le repositionnement et le redimensionnement d'un champ d'exploitation virtuel existant qui se trouve déjà dans la pluralité de champs d'exploitation (410, 411, 412, 510, 511, 512) en ce qui concerne la partie de l'affichage électronique que couvre le champ d'exploitation virtuel existant.

4. Système d'interface de véhicule (301) selon la revendication 2, dans lequel le circuit de traitement est configuré-pour ajouter le troisième champ d'exploitation virtuel à la pluralité de champs d'exploitation virtuels (410, 411, 412, 510, 511, 512) uniquement si un nombre de champs d'exploitation virtuels dans la pluralité de champs d'exploitation virtuels (410, 411, 412, 510, 511, 512) est inférieur à un nombre maximal prédéterminé de champs d'exploitation virtuels avant l'ajout du troisième champ d'exploitation virtuel.

5. Système d'interface de véhicule (301) selon la revendication 1, comprenant en outre un capteur tactile (320) configuré pour recevoir une entrée de l'occupant du véhicule ; dans lequel le circuit de traitement est configuré pour naviguer entre les champs d'exploitation virtuels de la pluralité de champs d'exploitation virtuels (410, 411, 412, 510, 511, 512) en utilisant le capteur tactile (320).

6. Système d'interface de véhicule (301) selon la revendication 1, dans lequel le circuit de traitement est configuré-pour présenter, via l'affichage électronique, un menu de gestion d'applications pour gérer la disponibilité et l'affichage de la pluralité d'applications logicielles.

7. Système d'interface de véhicule (301) selon la revendication 1, dans lequel au moins une application logicielle de la pluralité d'applications logicielles est une application de navigation et un occupant du véhicule interagit avec l'application de navigation en utilisant un dispositif portatif sans fil.

8. Système d'interface de véhicule (301) selon la revendication 1, dans lequel le mappeur d'affichage est configuré pour affecter le premier champ d'exploitation virtuel à la première application logicielle et pour afficher le premier champ d'exploitation virtuel via un premier appareil d'affichage électronique ;
dans lequel le mappeur d'affichage est configuré pour affecter le deuxième champ d'exploitation virtuel à la deuxième application logicielle et pour afficher le deuxième champ d'exploitation virtuel via un second appareil d'affichage électronique ;
dans lequel le premier champ d'exploitation virtuel et le deuxième champ d'exploitation virtuel sont fonctionnellement indépendants, permettant à un premier occupant du véhicule d'interagir avec la première application logicielle via le premier champ d'exploitation virtuel indépendamment d'un second occupant interagissant avec la deuxième application logicielle via le deuxième champ d'exploitation virtuel.

9. Système d'interface de véhicule (301) selon la revendication 1, dans lequel l'au moins un affichage électronique comprend un affichage tête haute (230), un écran du combiné d'instruments (220) et au moins un autre affichage vidéo ;
dans lequel au moins l'un de la pluralité de champs d'exploitation virtuels (410, 411, 412, 510, 511, 512) est présenté via chacun de l'affichage tête haute (230), de l'écran du combiné d'instruments (220) et d'au moins un autre affichage vidéo.

10. Procédé de traitement et de présentation d'informations dans un véhicule, le procédé comprenant :
l'affichage d'informations à un occupant du véhicule via au moins un affichage électronique ;
la partition d'un champ d'affichage de l'au moins un affichage électronique en une pluralité de champs d'exploitation virtuels (410, 411, 412, 510, 511, 512), chacun de la pluralité de champs d'exploitation virtuels (410, 411, 412, 510, 511, 512) couvrant une partie non chevauchante du champ d'affichage ;
l'exécution d'une pluralité d'applications logicielles configurées pour fournir des données d'affichage pour une présentation via l'affichage électronique sur une couche matérielle (140) d'un circuit de traitement, la couche matérielle (140) comprenant une pluralité de coeurs de traitement de sorte qu'une première application logicielle s'exécute sur un premier coeur de traitement et une deuxième application logicielle s'exécute sur un second coeur de traitement, dans lequel une couche de virtualisation matérielle (142) d'une mémoire du circuit de traitement comprend un logiciel permettant d'accéder à la couche matérielle (140), et une couche fonctionnelle (146) de la mémoire comprend la pluralité d'applications logicielles, dans lequel la couche matérielle (140) exécute la première application logicielle et la deuxième application logicielle compartimentées sur des processeurs uniques de la couche matérielle (140) ;
l'affectation de chacun des champs d'exploitation virtuels (410, 411, 412, 510, 511, 512) à l'une de la pluralité d'applications logicielles, dans lequel l'affectation des champs d'exploitation virtuels (410, 411, 412, 510, 511, 512) comprend l'affectation de la première application logicielle à un premier champ d'exploitation virtuel et l'affectation de la deuxième application logicielle à un deuxième champ d'exploitation virtuel ; et
la présentation, via la pluralité de champs d'exploitation virtuels (410, 411, 412, 510, 511, 512), des données d'affichage fournies par la pluralité d'applications logicielles, dans lequel chacun des champs d'exploitation virtuels (410, 411, 412, 510, 511, 512) présente des données d'affichage fournies par l'application logicielle à laquelle le champ d'exploitation virtuel est affecté ;
la réaffectation, par un mappeur d'affichage, d'un champ d'exploitation virtuel d'une des applications logicielles à une autre application logicielle en réponse à la détermination qu'un nombre de champs d'exploitation virtuels dans la pluralité de champs d'exploitation virtuels (410, 411, 412, 510, 511, 512) est égal ou supérieur à un nombre maximal prédéterminé de champs d'exploitation virtuels et qu'aucun champ d'exploitation virtuel de la pluralité de champs d'exploitation virtuels (410, 411, 412, 510, 511, 512) n'est affecté à l'affichage d'informations pour l'autre application logicielle ; dans lequel l'affichage électronique comprend au moins une partie réservée non couverte par-un champ d'exploitation virtuel de la pluralité de champs d'exploitation virtuels (410, 411, 412, 510, 511, 512) ;
le procédé comprenant en outre l'affichage d'au moins une information de vitesse sur route et une information de vitesse de moteur pour le véhicule via la partie réservée.

11. Procédé selon la revendication 10, comprenant en outre l'ajout d'un troisième champ d'exploitation virtuel à la pluralité de champs d'exploitation virtuels (410, 411, 412, 510, 511, 512) afin d'afficher des informations pour une troisième application logicielle à laquelle le troisième champ d'exploitation virtuel est affecté .

12. Support de stockage lisible par ordinateur non transitoire comprenant un code-de programme informatique pour traiter et présenter des informations dans un véhicule, le code de programme informatique comprenant des instructions qui, lorsqu'elles sont exécutées par un processeur, amènent ledit processeur à :
afficher des informations à un occupant du véhicule via au moins un affichage électronique ;
partitionner un champ d'affichage de l'au moins un affichage électronique en une pluralité de champs d'exploitation virtuels (410, 411, 412, 510, 511, 512), chacun de la pluralité de champs d'exploitation virtuels (410, 411, 412, 510, 511, 512) couvrant une partie non chevauchante du champ d'affichage ;
exécuter une pluralité d'applications logicielles configurées pour fournir des données d'affichage pour une présentation via l'affichage électronique sur une couche matérielle (140) d'un circuit de traitement, la couche matérielle (140) comprenant une pluralité de coeurs de traitement de sorte qu'une première application logicielle s'exécute sur un premier coeur de traitement et une deuxième application logicielle s'exécute sur un second coeur de traitement, dans lequel une couche de virtualisation matérielle (142) d'une mémoire du circuit de traitement comprend un logiciel permettant d'accéder à la couche matérielle (140) et une couche fonctionnelle (146) de la mémoire comprend la pluralité d'applications logicielles, dans lequel la couche matérielle (140) exécute la première application logicielle et la deuxième application logicielle compartimentées sur des processeurs uniques de la couche matérielle (140) ;
affecter chacun des champs d'exploitation virtuels (410, 411, 412, 510, 511, 512) à l'une de la pluralité d'applications logicielles, dans lequel l'affectation des champs d'exploitation virtuels (410, 411, 412, 510, 511, 512) comprend l'affectation de la première application logicielle à un premier champ d'exploitation virtuel et l'affectation de la deuxième application logicielle à un deuxième champ d'exploitation virtuel ; et
présenter, via la pluralité de champs d'exploitation virtuels (410, 411, 412, 510, 511, 512), des données d'affichage fournies par la pluralité d'applications logicielles, dans lequel chacun des champs d'exploitation virtuels (410, 411, 412, 510, 511, 512) présente des données d'affichage fournies par l'application logicielle à laquelle le champ d'exploitation virtuel est affecté ;
configurer un mappeur d'affichage pour réaffecter un champ d'exploitation virtuel d'une des applications logicielles à une autre application logicielle en réponse à la détermination qu'un nombre de champs d'exploitation virtuels dans la pluralité de champs d'exploitation virtuels (410, 411, 412, 510, 511, 512) est égal ou supérieur à un nombre maximal prédéterminé de champs d'exploitation virtuels-et qu'aucun champ d'exploitation virtuel de la pluralité de champs d'exploitation virtuels (410, 411, 412, 510, 511, 512) n'est affecté à l'affichage d'informations pour l'autre application logicielle ; dans lequel l'affichage électronique comprend au moins une partie réservée non couverte par un champ d'exploitation virtuel de la pluralité de champs d'exploitation virtuels (410, 411, 412, 510, 511, 512) et l'au moins une partie réservée affiche des informations de vitesse sur route et des informations de vitesse de moteur pour le véhicule.
